# EUROPÄISCHE PATENTSCHRIFT

(11) **EP 2 513 240 B1**
(45) Veröffentlichungstag und Bekanntmachung des Hinweises auf die Patenterteilung: **16.10.2013**
(21) Anmeldenummer: 10798037.7
(22) Anmeldetag: 14.12.2010
(51) Int. Cl.: C09D 133/06

(54) **EIN-/ZWEIKOMPONENTEN BESCHICHTUNGSMASSEN, DIE POLYMERDISPERSIONEN ENTHALTEN, SOWIE VERFAHREN ZU DEREN HERSTELLUNG UND DEREN VERWENDUNG IM KORROSIONSSCHUTZ**
Polymer dispersions
Dispersions de polymères

(30) Priorität: 18.12.2009 EP 09179971
(43) Veröffentlichungstag der Anmeldung: 24.10.2012
(73) Patentinhaber: BASF SE, 67056 Ludwigshafen (DE)
(72) Erfinder: ELIZALDE, Oihana, 67056 Ludwigshafen (DE); AMTHOR, Stephan, 67063 Ludwigshafen (DE); HARTIG, Jens, 67063 Ludwigshafen (DE)
(86) Internationale Anmeldenummer: PCT/EP2010/069616
(87) Internationale Veröffentlichungsnummer: WO 2011/080067

(56) Entgegenhaltungen:
- WO-A1-2006/118974
- WO-A2-02/08297
- DATABASE WPI Week 200644 Thomson Scientific, London, GB; AN 2006-432948 XP002574677, & WO 2006/054611 A1 (NIPPON PAINT CO LTD) 26. Mai 2006 (2006-05-26)
- DATABASE WPI Week 200728 Thomson Scientific, London, GB; AN 2007-286750 XP002647462, & JP 2007 045948 A (NIPPON PAINT CO LTD) 22. Februar 2007 (2007-02-22)

## Beschreibung

Die vorliegende Erfindung betrifft Beschichtungsmassen, die Dispersionen von mehrstufig erhaltenen Polymeren enthalten, Verfahren zu deren Herstellung und deren Verwendung im Korrosionsschutz.

US 3957711 beschreibt einstufige Polymere mit einem Hydroxyalkyl(meth)acrylat als Schutzkolloid, das in situ hergestellt und gefolgt von der Polymerisation anderer Monomere wird.

US 7317056 beschreibt zweistufig hergestellte Polymere für druckempfindliche Klebstoffe, in deren erster Stufe ein hoher Anteil Acrylsäure und Hydroxyalkylacrylate einpolymerisiert wird. Die nach dem dort beschriebenen Verfahren zeigen eine hohe Viskosität, was eine Verringerung des Feststoffanteils in der fertigen Dispersion erforderlich macht.

E. P. Pedraza, M. D. Soucek, Polymer (2005), 46(24), 11174-85 beschreiben Latizes aus Kern-Schale Polymeren, deren Kern aus (Meth)acrylaten und Hydroxyethylmethacrylat und deren Schale aus (Meth)acrylaten und Methacrylsäure aufgebaut ist. Die Polymerisation liefert große Partikel mit einer gemittelten Partikelgröße von mehr als 300 nm und einer z.T. bimodalen Partikelgrößenverteilung.

Nachteilig ist, dass gemäß der Lehre dieser Schrift ein hoher Anteil von mehr als 4% Emulgatoren, bezogen auf die Summe der eingesetzten Monomere, notwendig ist.

G. Teng, M. D. Soucek, Journal of Polymer Science: Part A: Polymer Chemistry, Vol. 40, 4256-4265 (2002) beschreiben Latizes aus Kern-Schale Polymeren, deren Kerne und Schalen je entweder aus (Meth)acrylaten oder aus (Meth)acrylaten und Hydroxyethylmethacrylat aufgebaut sind. Die Polymerisation liefert große Partikel mit einer gemittelten Partikelgröße von mehr als 250 nm.
Nachteilig ist auch hier, dass gemäß der Lehre dieser Schrift ein hoher Anteil von mehr als 4% Emulgatoren bezogen auf die Summe der eingesetzten Monomere notwendig ist.

EP 1602701 A1 beschreibt die Polymerisation von Monomeren in Gegenwart eines Schutzkolloid, das aus bestimmten hydrophoben und hydrophilen Monomeren hergestellt wird. Nachteilig ist, daß gemäß der Lehre dieser Schrift ein hoher Anteil von mehr als 40% hydrophiler Monomere für die Polymerisation eingesetzt wird, was zu Polymeren mit einer lediglich geringen Wasserstabilität führt.

WO 00/5276 beschreibt zweistufig hergestellte Polymere, in deren erster Stufe ein hoher Anteil Acrylsäure einpolymerisiert wird. Die nach dem dort beschriebenen Verfahren zeigen eine hohe Viskosität, was eine Verringerung des Feststoffanteils in der fertigen Dispersion erforderlich macht.

Aufgabe der vorliegenden Erfindung war es, Polymerdispersionen für Beschichtungsmassen zur Verfügung zu stellen, die in der Herstellung möglichst ohne oder lediglich mit mit einer geringen Menge Emulgator auskommen, eine verringerte Viskosität zeigen und zu Beschichtungen mit einer verbesserten Wasserstabilität führen.

Die Aufgabe wurde gelöst durch eine Beschichtungsmasse, enthaltend mindestens eine Polymerdispersion, erhältlich durch mindestens zweistufige Emulsionspolymerisation von
in einer ersten Stufe Umsetzung
(A1) mindestens eines (Meth)acrylsäurealkylesters,
(B1) optional mindestens eines Vinylaromaten mit bis zu 20 C-Atomen,
(C1) mindestens eines Hydroxyalkyl(meth)acrylats,
(D1) optional mindestens einer radikalisch polymerisierbaren Verbindung ausgewählt aus der Gruppe bestehend aus ethylenisch ungesättigten Nitrilen mit bis zu 20 C-Atomen, Vinylestem von bis zu 20 C-Atome enthaltenden Carbonsäuren, Vinylhalogeniden mit bis zu 10 C-Atomen und Vinylethem von 1 bis 10 C-Atome enthaltenden Alkoholen,
(E1) optional mindestens einer α,β-ethylenisch ungesättigten Carbonsäure,
(F1) optional mindestens einem Vernetzer,
(G1) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H1) optional mindestens einer Verbindung mit einer (Meth)acrylat- und einer Epoxygruppe und
(11) optional mindestens einem α,β-ethylenisch ungesättigten Carbonsäureamid,

in Gegenwart mindestens eines Initiators und optional in Gegenwart mindestens eines Emulgators sowie optional in Gegenwart mindestens eines Reglers,
mit der Maßgabe, daß das aus der ersten Stufe erhaltene Copolymer
- eine Säurezahl von nicht mehr als 10 mg KOH/g Polymer,
- eine Hydroxyzahl von 2 bis 100 mg KOH/g Polymer,
- eine Teilchengröße von 20 bis 350, bevorzugt 30 bis 200 nm und
- ein gewichtsmittleres Molekulargewicht von 5.000 bis 200.000 g/mol
aufweist,
und die Summe der Monomere (C1) und (11) von 0,5 bis 20 Gew% beträgt,
gefolgt von einer radikalischen Polymerisation in einer Folgestufe in Gegenwart des in der ersten Stufe hergestellten Copolymers von
(A2) mindestens einem (Meth)acrylsäurealkylester,
(B2) optional mindestens einem Vinylaromaten mit bis zu 20 C-Atomen,
(C2) optional mindestens einem Hydroxyalkyl(meth)acrylat,
(D2) optional mindestens einer radikalisch polymerisierbaren Verbindung ausgewählt aus der Gruppe bestehend aus ethylenisch ungesättigten Nitrilen mit bis zu 20 C-Atomen, Vinylestem von bis zu 20 C-Atome enthaltenden Carbonsäuren, Vinylhalogeniden mit bis zu 10 C-Atomen und Vinylethem von 1 bis 10 C-Atome enthaltenden Alkoholen,
(E2) optional mindestens einer α,β-ethylenisch ungesättigten Carbonsäure,
(F2) optional mindestens einem Vernetzer und
(G2) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H2) optional mindestens einer Verbindung mit einer (Meth)acrylat- und einer Epoxygruppe und
(I2) optional mindestens einem α,β-ethylenisch ungesättigten Carbonsäureamid,
optional gefolgt von einer oder mehreren weiteren Stufen einer radikalischen Polymerisation mindestens eines Monomeren,
wobei die Menge des mindestens einen Emulgators 0 bis 3,5 Gew% beträgt, bezogen auf die Gesamtmenge der in allen Stufen in die radikalische Polymerisation eindosierten radikalisch polymerisierbaren Monomere,
mit der Maßgabe, daß
- das Gewichtsverhältnis der Summe der Monomere der ersten Stufe (A1) bis (11) zur Summe der Monomere der Folgestufen (A2) bis (I2) von 5:95 bis 70:30 beträgt,
- das aus der letzten Stufe erhaltene Produkt eine Teilchengröße von 50 bis 500 nm aufweist,
- die Säurezahl des Produktes der letzten Stufe nicht höher ist als die Säurezahl des Produktes der ersten Stufe und
- die Hydroxyzahl des Produktes der letzten Stufe nicht höher ist als die Hydroxyzahl des Produktes der ersten Stufe.

In die Polymerisation können erfindungsgemäß folgende Monomere eingesetzt werden:

### (Meth)acrylsäurealkylester (A1) und (A2)

Dies umfaßt bevorzugt solche (Meth)acrylsäurealkylester, deren linearer oder verzweigter Alkylrest 1 bis 20 Kohlenstoffatome aufweist, besonders bevorzugt 1 bis 10, ganz besonders bevorzugt 1 bis 8 und insbesondere 1 bis 4 Kohlenstoffatome.

Zu nennen als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-*iso*-butylester, (Meth)acrylsäure-*sek*-butylester, (Meth)acrylsäure-n-pentylester, (Meth)acrylsäure-*iso*-pentylester, (Meth)acrylsäure-2-methyl-butylester, (Meth)acrylsäureamylester, (Meth)acrylsäure-n-hexylester, (Meth)acrylsäure-2-ethylbutylester,

(Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und (Meth)acrylsäure-n-dodecylester.

Bevorzugt sind Methylmethacrylat, Methylacrylat, Ethylacrylat, n-Butylacrylat, n-Hexylacrylat, n-Octylacrylat, 2-Ethylhexylacrylat und 3-Propylheptylacrylat.

Insbesondere sind auch Mischungen der (Meth)acrylsäurealkylester geeignet.

Vinylaromaten mit bis zu 20 C-Atomen (B1) und (B2)

Dabei handelt es sich um optional substituierte aromatische Systeme mit einer Vinylgruppe, die sich in Konjugation zum aromatischen Ringsystem befindet.

Solche substituierten Vinylaromaten weisen eine oder mehrere, bevorzugt eine 1 bis 10 Kohlenstoffatome, bevorzugt 1 bis 6 und besonders bevorzugt 1 bis 4 Kohlenstoffatome aufweisende lineare oder verzweigte Alkylgruppe auf, die sich am Aromaten oder an der Vinylgruppe befinden kann. Befindet sich der Substituent am Aromaten, so kann sich der Substituent bevorzugt in ortho- oder para-Position, besonders bevorzugt in para-Position zur Vinylgruppe befinden.

Als vinylaromatische Verbindungen kommen Vinyltoluol, Vinylnaphthalin, α- und p-Methylstyrol, α-Butylstyrol, 4-n-Butylstyrol, 4-n-Decylstyrol und vorzugsweise Styrol und α-Methylstyrol in Betracht.

### Hydroxyalkyl(meth)acrylat (C1) und (C2)

Bei den Hydroxyalkyl(meth)acrylaten handelt es sich um solche (Meth)acrylsäureester, deren Alkylengruppe ein bis 10, bevorzugt 2 bis 8, besonders bevorzugt 2 bis 6, ganz besonders bevorzugt 2 bis 4 und insbesondere 2 oder 3 Kohlenstoffatome umfaßt.

Bevorzugte Hydroxyalkyl(meth)acrylate sind beispielsweise (Meth)acrylsäure-2-hydroxyethylester, (Meth)acrylsäure-2-hydroxypropylester, (Meth)acrylsäure-3-hydroxypropylester und (Meth)acrylsäure-4-hydroxybutylester.

Besonders bevorzugt sind (Meth)acrylsäure-2-hydroxyethylester und (Meth)acrylsäure-2-hydroxypropylester, ganz besonders bevorzugt ist (Meth)acrylsäure-2-hydroxyethylester.

Denkbar sind auch solche Hydroxyalkyl(meth)acrylate, die mehr als eine Hydroxygruppe aufweisen, beispielsweise zwei bis fünf, bevorzugt zwei bis vier, besonders bevorzugt zwei bis drei. Beispiele dafür sind Glycerinmono(meth)acrylat, Trimethylolpropanmono(meth)acrylat, Pentaerythritmono(meth)acrylat und Mono(meth)acrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit und Isomalt.

### Radikalisch polymerisierbaren Verbindung (D1) und (D2)

Die Verbindungen (D1) und (D2) sind ausgewählt aus der Gruppe bestehend aus ethylenisch ungesättigten Nitrilen mit bis zu 20 C-Atomen, Vinylestem von bis zu 20 C-Atome enthaltenden Carbonsäuren, Vinylhalogeniden mit bis zu 10 C-Atomen und Vinylethern von 1 bis 10 C-Atome enthaltenden Alkoholen, bevorzugt ausgewählt aus der Gruppe bestehend aus ethylenisch ungesättigten Nitrilen mit bis zu 20 C-Atomen und Vinylethern von 1 bis 10 C-Atome enthaltenden Alkoholen und besonders bevorzugt handelt es sich um ethylenisch ungesättigten Nitrilen mit bis zu 20 C-Atomen.

### Ethylenisch ungesättigte Nitrile mit bis zu 20 C-Atomen

Beispiele für ethylenisch ungesättigte Nitrile sind Fumarsäuredinitril, Acrylnitril und Methacrylnitril, bevorzugt Acrylnitril und Methacrylnitril und besonders bevorzugt Acrylnitril.

### Vinylester von bis zu 20 C-Atome enthaltenden Carbonsäuren

Vinylester von Carbonsäuren mit 1 bis 20 C-Atomen sind z.B. Vinyllaurat, Vinylstearat, Vinylpropionat, Versaticsäurevinylester, Vinylbutyrat und Vinylacetat, bevorzugt Vinylacetat.

### Vinylhalogenide mit bis zu 10 C-Atomen

Die Vinylhalogenide sind mit Chlor, Fluor oder Brom substituierte ethylenisch ungesättigte Verbindungen, bevorzugt Vinylchlorid und Vinylidenchlorid.

### Vinylether von 1 bis 10 C-Atome enthaltenden Alkoholen

Als Vinylether zu nennen sind z.B. Methylvinylether, Ethylvinylether, *n*-Propylvinylether, *iso-*Propylvinylether, *n*-Butylvinylether, *sek*-Butylvinylether, *iso*-Butylvinylether, *tert*-Butylvinylether und *n*-Octylvinylether. Bevorzugt wird Vinylether von 1 bis 4 C-Atome enthaltenden Alkoholen.

### α,β-Ethylenisch ungesättigten Carbonsäure (E1) und (E2)

Dabei handelt es sich um 3 bis 10, bevorzugt 3 bis 6, besonders bevorzugt 3 bis 4 Kohlenstoffatome aufweisende α,β-ethylenisch ungesättigten Carbonsäuren.

Bevorzugt sind (Meth)acrylsäure, Crotonsäure oder Dicarbonsäuren, z.B. Itaconsäure, Maleinsäure oder Fumarsäure, besonders bevorzugt Methacrylsäure und Acrylsäure.

(Meth)Acrylsäure steht in dieser Beschreibung für Methacrylsäure und Acrylsäure.

### Vernetzer (F1) und (F2)

Vernetzer sind solche, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2.

Als Beispiele genannt seien für Di- und Poly(meth)acrylate 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpro-pantri(meth)acrylat, Trimethylolethantri(meth)acrylat, Pentaerythritoltri- und -tetra(meth)acrylat.

Ferner erwähnt sei Divinylbenzol.

Besonders bevorzugt sind die Vernetzer ausgewählt aus der Gruppe bestehend aus Divinylbenzol, 1,4-Butandioldiacrylat und Allylmethacrylat.

Wenn Verbindungen (F1) und (F2) eingesetzt werden, so werden diese bevorzugt in der zweiten Stufe und nicht in der ersten Stufe eingesetzt, d.h. wenn die Menge an ((F1) + (F2)) ≠ 0 ist, so ist bevorzugt die Menge an (F2) ≠ 0 und (F1) = 0.

Verbindungen (G1) und (G2) sind ausgewählt aus der Gruppe bestehend aus (Meth)acrylsäure 2-(2-oxo-imidazolidin-1-yl)-ethyl ester (Ureidoethyl (meth)acrylat), N-[2-(2-oxo-oxazolidin-3-yl)-ethyl]-methacrylat, Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid.

Bevorzugt sind (Meth)acrylsäure 2-(2-oxo-imidazolidin-1-yl)-ethyl ester, (Acetoacetoxy) ethyl methacrylat und Diacetonacrylamid, besonders bevorzugt sind (Meth)acrylsäure 2-(2-oxo-imidazolidin-1-yl)-ethyl ester und (Acetoacetoxy) ethyl methacrylat und ganz besonders bevorzugt ist Diacetonacrylamid.

Wenn Verbindungen (G1) und (G2) eingesetzt werden, so werden diese bevorzugt in der ersten Stufe und nicht in der zweiten Stufe eingesetzt, d.h. wenn die Menge an ((G1) + (G2)) ≠ 0 ist, so ist bevorzugt die Menge an (G1) ≠ 0 und (G2) = 0.

### (H1) und (H2)

Bei diesen Verbindungen handelt es sich um mindestens eine Verbindung mit einer (Meth)acrylat- und einer Epoxygruppe. Insbesondere zu erwähnen sind Glycidylacrylat und Glycidylmethacrylat, bevorzugt Glycidylmethacrylat.

### (11) und (12)

Bei diesen Verbindungen handelt es sich um mindestens ein α,β-ethylenisch ungesättigtes Carbonsäureamid, bevorzugt um ein Amid der unter (C1) und (C2) bezeichneten Carbonsäuren.

Besonders bevorzugt sind (Meth)acrylsäureamid, Crotonsäureamid oder Amide von Dicarbonsäuren, z.B. Itaconsäurediamid, Maleinsäurediamid oder Fumarsäurediamid, besonders bevorzugt Methacrylsäureamid und Acrylsäureamid, ganz besonders bevorzugt Acrylsäureamid.

Wenn Verbindungen (I1) und (I2) eingesetzt werden, so werden diese bevorzugt in der ersten Stufe und nicht in der zweiten Stufe eingesetzt, d.h. wenn die Menge an ((I1) + (I2)) ≠ 0 ist, so ist bevorzugt die Menge an (I1) ≠ 0 und (I2) = 0.

Es können weiterhin in untergeordneten Mengen, beispielsweise in weniger als 5 Gew%, bevorzugt weniger als 3 Gew%, besonders bevorzugt weniger als 1 Gew%, ganz besonders bevorzugt 0 Gew% andere als die oben aufgeführten Monomere eingesetzt werden, was jedoch weniger bevorzugt ist.

Die Monomerzusammensetzung der ersten Stufe ist in der Regel wie folgt:
(A1) 30 bis 99,5, bevorzugt 40 bis 99, besonders bevorzugt 50 bis 97 Gew% mindestens eines (Meth)acrylsäurealkylesters
(B1) 0 bis 70, bevorzugt 5 bis 60, besonders bevorzugt 10 bis 50 Gew% mindestens eines Vinylaromaten mit bis zu 20 C-Atomen,
(C1) 0,5 bis 20, bevorzugt 1 bis 15, besonders bevorzugt 3 bis 10 Gew% mindestens eines Hydroxyalkyl(meth)acrylats,
(D1) 0 bis 20, bevorzugt 0 bis 10, besonders bevorzugt 0 bis 5 und ganz besonders bevorzugt 0 Gew% mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethem von 1 bis 10 C-Atome enthaltenden Alkoholen, und
(E1) 0 bis 5, bevorzugt 0 bis 3, besonders bevorzugt 0 bis 1, ganz besonders bevorzugt 0 bis 0,5 und insbesondere 0 Gew% mindestens einer α,β-ethylenisch ungesättigten Carbonsäure,
(F1) 0 bis 20, bevorzugt 0 bis 10, besonders bevorzugt 0 bis 5 und ganz besonders bevorzugt 0 Gew%
(G1) 0 bis 20, bevorzugt 0 bis 10, besonders bevorzugt 0 bis 5 und ganz besonders bevorzugt 0 Gew%
(H1) 0 bis 20, bevorzugt 0 bis 10, besonders bevorzugt 0 bis 5 und ganz besonders bevorzugt 0 Gew%
(I1) 0 bis 19,5, bevorzugt 0 bis 10, besonders bevorzugt 0 bis 5 und ganz besonders bevorzugt 0 Gew%
wobei die Summe, bezogen auf die in die erste Stufe eingesetzten Monomere, immer 100 Gew% ergibt und die Menge des Monomeren (E1) so bemessen ist, daß das aus der ersten Stufe erhaltene Polymer eine Säurezahl von nicht mehr als 10 mg KOH/g, bevorzugt nicht mehr als 8, besonders bevorzugt nicht mehr als 5, ganz besonders bevorzugt nicht mehr als 3, insbesondere nicht mehr als 1 mg KOH/g und speziell von 0 mg KOH/g aufweist mit der Maßgabe, daß die Summe der Monomere (C1) und (I1) von 0,5 bis 20 Gew%, bevorzugt von 0,5 bis 15, besonders bevorzugt von 0,5 bis 10 und ganz besonders bevorzugt von 1 bis 10 Gew% beträgt.

Die Säurezahl wird in dieser Schrift, wenn nicht anders angegeben, gemäß DIN EN ISO 3682 (potentiometrisch) bestimmt.

Die Hydroxyzahl des aus der ersten Stufe erhaltenen Polymers beträgt von 2 bis 100 mg KOH/g, bevorzugt von 5 bis 80 und besonders bevorzugt von 8 bis 60 mg KOH/g.

Die Hydroxyzahl wird in dieser Schrift, wenn nicht anders angegeben, gemäß DIN 53240-2 (potentiometrisch bei einer Acetylierungszeit von 20 Minuten) bestimmt.

Die Teilchengröße des aus der ersten Stufe erhaltenen Polymers beträgt in der Regel von 20 bis 80 nm, bevorzugt 30 bis 60 nm wenn in Gegenwart mindestens eines Emulgators gearbeitet wird.

Ist dagegen kein Emulgator anwesend, so kann die Teilchengröße bis zu 350, bevorzugt bis zu 300, besonders bevorzugt bis zu 250 und ganz besonders bevorzugt bis zu 200 nm betragen.

Als Teilchengröße wird in dieser Schrift der gewichtsmittlere Durchmesser der Polymerpartikel in der Dispersion (bestimmt gemäß ISO13321 mit einem High Performance Particle Sizer von der Fa. Malvern bei 22 °C und einer Wellenlänge von 633 nm) verstanden.

Das gewichtsmittlere Molekulargewicht Mw des aus der ersten Stufe erhaltenen Polymers beträgt von 5.000 bis 200.000 g/mol, bevorzugt von 7.000 bis 100.000, besonders bevorzugt von 8.000 bis 50.000 und ganz besonders bevorzugt von 10.000 bis 30.000.

In dieser Schrift wird das gewichtsmittlere Molekulargewicht Mw, wenn nicht anders angegeben, bestimmt über eine Größenausschlußchromatographie (size exclusion chromatography, SEC) mit Tetrahydrofuran + 0,1 Gew% Trifluoressigsäure als Eluent bei einer Durchflußgeschwindigkeit von 1 ml/min und 35 °C Säulentemperatur. Die Probe wird im Eluenten auf eine Konzentration von 2 mg/ml verdünnt und 100 µl davon injiziert, nachdem die Probelösung über ein 0,2 *µm Filter (Sartorius Minisart SRP 25) zur Entfernung eines etwaigen Gelanteils filtriert wurde. Als Säulen wurden drei Säulen mit einem inneren Durchmesser von 7,5 mm kombiniert wie folgt: 5 cm Vorsäule (Plgel 10µ Guard Vorsäule) gefolgt von zwei 30 cm Trennsäulen (jeweils Plgel 10µ Mixed B). Die Detektion erfolgte mittels eines Differentialrefraktometers Agilent 1100, UV-Photometer Agilent 1100 VWD, PSS SLD7000-BI-MwA (UV/254 nm/Agilent). Die Kalibrierung erfolgte mit eng verteiltem Polystyrol-Standards der Fa. Polymer Laboratories mit Molekulargewichten von M = 580 bis M = 7.500.000, sowie Hexylbenzol (M = 162). Die Werte außerhalb des Elutionsbereichs wurden extrapoliert.

Durch die der Molekulargewichtsbestimmung vorgeschalteten Filtration wird ein etwaiger Gelanteil des Polymeren entfernt, so daß sich die angegebenen Werte auf den Solanteil beziehen.

Der unlösliche Anteil des Polymeren kann bestimmt werden durch vierstündige Extraktion mit Tetrahydrofuran in einer Soxhlet-Apparatur und, nach Trocknung des Rückstandes bis zur Gewichtskonstanz, Wägung des verbliebenen Rückstandes.

Nach der ersten Stufe sind die eingesetzten Monomeren zu mindestens 90%, bevorzugt mindestens 95% und besonders bevorzugt zu mindestens 98% abreagiert.

Der Monomerenzulauf in die zweite Stufe und optional weitere darauf folgende Stufen ist in der Regel wir folgt:
(A2) 1 bis 100, bevorzugt 2 bis 95, besonders bevorzugt 5 bis 90 Gew%, ganz besonders bevorzugt 10 bis 80 Gew% mindestens eines (Meth)acrylsäurealkylesters,
(B2) 0 bis 70, bevorzugt 0 bis 60, besonders bevorzugt 0 bis 50 Gew% mindestens eines Vinylaromaten mit bis zu 20 C-Atomen,
(C2) 0 bis 20, bevorzugt 0 bis 15, besonders bevorzugt 0 bis 10 Gew% mindestens eines Hydroxyalkyl(meth)acrylats,
(D2) 0 bis 40, bevorzugt 0 bis 30, besonders bevorzugt 0 bis 25 und ganz besonders bevorzugt 0 bis 20 Gew% mindestens einer radikalisch polymerisierbaren Verbindung ausgewählt aus der Gruppe bestehend aus ethylenisch ungesättigten Nitrilen mit bis zu 20 C-Atomen, Vinylestem von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E2) 0 bis 5, bevorzugt 0 bis 3, besonders bevorzugt 0 bis 1, ganz besonders bevorzugt 0 bis 0,5 und insbesondere 0 Gew% mindestens einer α,β-ethylenisch ungesättigten Carbonsäure, (F2) 0 bis 3,5 Gew%, bevorzugt 0 bis 2,5, besonders bevorzugt 0 bis 1,5 und ganz besonders bevorzugt 0 bis 1 Gew% mindestens eines Vernetzers und
(G2) 0 bis 10, bevorzugt 1 bis 10, besonders bevorzugt 2 bis 10, ganz besonders bevorzugt 5 bis 10 Gew%,
(H2) 0 bis 20, bevorzugt 0 bis 10, besonders bevorzugt 0 bis 5 und ganz besonders bevorzugt 0 Gew%
(12) 0 bis 20, bevorzugt 0 bis 10, besonders bevorzugt 0 bis 5 und ganz besonders bevorzugt 0 Gew%
wobei die Summe, bezogen auf die in die zweite und weitere Stufen dosierten Monomere, immer 100 Gew% ergibt.

Das Gewichtsverhältnis der Summe der Monomere der ersten Stufe (A1) bis (I1) zur Summe der Monomere der zweiten und weiteren Stufe (A2) bis (I2) beträgt von 5:95 bis 70:30, bevorzugt von 10:90 bis 70:30, besonders bevorzugt von 20:80 bis 65:35, ganz besonders bevorzugt von 30:70 bis 60:40 und insbesondere von 40:60 bis 60:40.

Dieser zweiten Stufe können sich optional noch eine oder mehrere Stufen einer radikalischen Polymerisation mit einem oder mehreren der Monomer (A2) bis (I2) anschließen.

Das aus der letzten Stufe erhaltene Produkt weist in der Regel eine Teilchengröße von 50 bis 350 nm, bevorzugt von 60 bis 250, besonders bevorzugt von 70 bis 200 nm auf, sofern man in Gegenwart mindestens eines Emulgatoren arbeitet.

Die Teilchengröße des aus der letzten Stufe erhaltenen Polymers kann bis 500 nm, bevorzugt bis 400 nm betragen, wenn in Abwesenheit von Emulgatoren gearbeitet wird.

Die Zunahme des Durchmessers der Teilchen von der ersten zur zweiten Stufe ist abhängig von den einpolymerisierten Monomermengen der ersten und zweiten Stufe. In der Regel wird der Zuwachs des Durchmessers der Teilchen von der ersten zur zweiten Stufe von 5 bis 50% betragen, bevorzugt von 10 bis 40%, besonders bevorzugt von 20 bis 35%, ganz besonders bevorzugt von 25 bis 35% und insbesondere um 30%.

Das aus der letzten Stufe erhaltene Produkt weist in der Regel ein gewichtsmittleres Molekulargewicht Mw bezogen auf den Solanteil von 50.000 bis 300.000 g/mol auf.

In der Regel sind die Teilchen des aus der letzten Stufe erhaltenen Produktes umso kleiner, je mehr Emulgator und je mehr Produkt aus der ersten Stufe anwesend ist.

Die Polymerdispersionen lassen sich in an sich bekannter Weise nach den allgemein bekannten Verfahren der Emulsionspolymerisation aus den Monomeren unter Verwendung der üblichen Emulgier- und Dispergierhilfsmittel und Polymerisationsinitatoren herstellen.

Als Dispergiermittel für die Durchführung von radikalisch wässerigen Emulsionspolymerisationen kommen üblicherweise eingesetzten Emulgatoren in Mengen von 0 bis 3,5 Gew.-%, bevorzugt von 0 bis 3 Gew.-% besonders bevorzugt von 0,1 bis 2, ganz besonders bevorzugt von 0,1 bis 1,5 und insbesondere 0,1 bis 1 Gew%, bezogen auf die Gesamtmenge der in allen Stufen in die radikalische Polymerisation eindosierten radikalisch polymerisierbaren Monomere, in Betracht. Bevorzugt ist mindestens ein Emulgator anwesend.

Als Emulgatoren im Sinne der vorliegenden Schrift werden solche Verbindungen bezeichnet, die in der Lage sind durch Verringerung der Grenzflächenspannung zwischen einer organischen und eine wäßrigen Phase eine Dispersion dieser Phasen zu stabilisieren.

Weitere gebräuchliche Emulgatoren sind z.B. Ammonium- oder Alkalimetallsalze von C₈ bis C₂₀-Alkylsulfonaten, -sulfaten, -phosphonaten, -phosphaten und -carboxylaten, wie z.B. höherer Fettalkoholsulfate wie Na-n-Laurylsulfat, oder von C₈ bis C₂₀-Alkylbenzolsulfonaten, -sulfaten, - phosphonaten, -phosphaten und -carboxylaten, alkoxylierte, bevorzugt ethoxylierte C₈ bis C₁₂-Alkylphenole mit einem Ethoxylierungsgrad von 3 bis 30 sowie alkoxylierte, bevorzugt ethoxylierte C₈ bis C₂₅-Fettalkohole mit einem Ethoxylierungsgrad von 5 bis 50. Diese alkoxylierten Alkohole können auch verestert vorliegen als Sulfat, Sulfonat, Phosphat, Polyphosphat oder Phosphonat mit Ammonium- oder Alkalimetallionen als Gegenionen.

Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Mit Vorteil handelt es sich bei den erfindungsgemäß eingesetzten Emulgatoren um ionische, insbesondere um anionische Emulgatoren oder Kombinationen davon.

In einer bevorzugten Ausführungsform werden als Emulgatoren solche eingesetzt, die bei der radikalischen Polymerisation in das Polymer eingebaut werden. Dabei handelt es sich in der Regel um Verbindungen, die mindestens eine radikalisch polymerisierbare Gruppe tragen, bevorzugt ausgewählt aus der Gruppe bestehend aus Allyl, Acrylat, Methacrlyat und Vinylether, und mindestens einer emulgierend wirkenden Gruppe, bevorzugt ausgewählt aus der oben angegebenen Gruppe.

Dies sind beispielsweise einbaubare Emulgatoren der Marken Bisomer® MPEG 350 MA der Firma Laporte, Hitenol® BC-20 (APEO), Hitenol® BC-2020, Hitenol® KH-10 oder Noigen® RN-50 (APEO) der Firma Dai-Ichi Kogyo Seiyaku Co., Ltd., Maxemul® 6106, Maxemul® 6112, Maxemul® 5010, Maxemul® 5011 der Firma Croda, Sipomer® PAM 100, Sipomer® PAM 200, Sipomer® PAM 300, Sipomer® PAM 4000, Sipomer® PAM 5000 der Firma Rhodia, Adeka® Reasoap® PP-70, Adeka® Reasoap® NE-10, Adeka® Reasoap® NE-20, Adeka® Reasoap® NE-30, Adeka® Reasoap® NE-40, Adeka® Reasoap® SE-10N, Adeka® Reasoap® SE-1025A, Adeka® Reasoap® SR-10, Adeka® Reasoap® SR-1 025, Adeka® Reasoap® SR-20, Adeka® Reasoap® ER-10, Adeka® Reasoap® ER-20, Adeka® Reasoap® ER-30, Adeka® Reasoap® ER-40 der Firma Adeka, Pluriol® A 010 R, Pluriol® A 12 R, Pluriol® A 23 R, Pluriol® A 46 R, Pluriol® A 750 R, Pluriol® A 950 R, Pluriol® A 590 I, Pluriol® A 1190 I, Pluriol® A 590 V, Pluriol® A 1190 V, Pluriol® A 5890 V, Pluriol® A 308 R und DAA ES 8761 der Firma BASF, Latemul® S 180 A und Latemul ®S 180 der Firma Kao, Eleminol® JS-2 der Firma Sanyou Kasei, Aquaron® HS-1025 der Firma Daiichi Kogyou Seiyaku sowie C12-AMPS der Firma Lubrizol.

Als Polymerisationsinitiatoren kommen alle diejenigen im Betracht, die in der Lage sind, eine radikalische Emulsionspolymerisation in wässerigen Medien auszulösen. Sie werden im allgemeinen in Mengen von 0,1 bis 10 Gew.-%, vorzugsweise von 0,2 bis 4 Gew.-%, bezogen auf die Monomeren, eingesetzt. Übliche Verbindungen sind anorganische Peroxide, z.B. Natrium-und Ammoniumperoxidisulfat und Wasserstoffperoxid, organische Peroxide wie Dibenzoylperoxid oder tert.-Butylhydroperoxid sowie Azoverbindungen wie Azoisobuttersäuredinitril. Diese Initiatoren sind für die bei den radikalischen Emulsionspolymerisationen üblichen Reaktionstemperaturen von 50 bis 100°C geeignet. Werden niedrigere Reaktionstemperaturen von etwa 40 bis 60°C gewünscht, sind Redoxsysteme wie Kombinationen aus Perverbindungen und einem reduzierenden Co-Initiator dem Natriumsalz der Hydroxymethansulfinsäure, Ascorbinsäure oder Eisen-II-salzen vorzuziehen.

Die Herstellung wäßriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, I. c., Seiten 133ff).

Besonders bewährt hat sich ein Zulauf-Verfahren, bei dem man von einer Vorlage, bestehend aus einem Teil der Monomeren, im allgemeinen bis zu 20 Gew.-%, Wasser, Emulgator und Initiator ausgeht. Der Rest der Monomeren und gegebenenfalls Regler in emulgierter Form sowie zusätzlich eine wässerige Lösung weiteren Polymerisationsinitiators werden nach Maßgabe der Polymerisation zugesetzt.

Dabei können die Monomere auf mehrere Zuläufe verteilt werden und mit variabler Dosierungsgeschwindigkeit und/oder variablem Gehalt an einem oder mehreren Monomeren versehen werden.

In einer möglichen Ausführungsform können unterschiedliche Vernetzungsgrade des Innen-und Außenbereichs hergestellt werden, indem im Reaktionsgemisch die Konzentration an Monomeren und Vernetzern weitgehend konstant gelassen wird, jedoch die Menge an Regler (Chain Transfer Agent, Kettenübertragungsmittel) variiert wird.

Durch die Anwesenheit von Reglern in einer Polymerisierung wird durch Kettenabbruch und Start einer neuen Kette durch das so entstandene neue Radikal in der Regel das Molekulargewicht des entstehenden Polymers verringert und bei Anwesenheit von Vernetzern auch die Anzahl der Vernetzungsstellen (Vernetzungsdichte) verringert. Wird im Verlauf einer Polymerisierung die Konzentration an Regler erhöht, so wird die Vernetzungsdichte im Verlauf der Polymerisierung weiter verringert.

Derartige Molekulargewichtsregler sind bekannt, beispielsweise kann es sich um Mercaptoverbindungen handeln, wie bevorzugt tertiäres Dodecylmercaptan, n-Dodecylmercaptan, iso-Octylmercaptopropionsäure, Mercaptopropionsäure, dimeres α-Methylstyrol, 2-Ethylhexylthioglykolsäureester (EHTG), 3-Mercaptopropyl-trimethoxysilan (MTMO) oder Terpinolen. Die Molekulargewichtsregler sind bekannt und beispielsweise beschrieben in Houben-Weyl, Methoden der organischen Chemie, Bd. XIV/1, S. 297 ff., 1961, Stuttgart.

In einer bevorzugten Ausführungsform der vorliegenden Erfindung kann die Polymerisierung durchgeführt werden wie in EP 853 636 oder in US 3804881 beschrieben. Auf die Offenbarung dieser beiden Dokumente sei hiermit durch Referenznahme ausdrücklich Bezug genommen.

Die so erhaltenen wäßrigen Polymerdispersion haben vorzugsweise einen Feststoffgehalt von 35 bis 65, besonders bevorzugt von 38 bis 55 Gew.-%.

Die Polymerdispersionen zeichnen sich durch eine hohe Stabilität aus, es kommt kaum zu Koagulatbildungen. Bei gleicher Hydroxyzahl, gleichem Festkörpergehalt und gleichem Molekulargewicht weisen die erfindungsgemäßen Polymerdispersionen eine geringere Viskosität als vergleichbare Polymerdispersionen auf, die nicht erfindungsgemäß erhalten worden sind.

Die Glasübergangstemperatur T_{g}, wird in dieser Schrift bevorzugt bestimmt gemäß ISO 11357-2-3-7 über Differential Scanning Calorimetry (DSC), bevorzugt mit einer Aufheizrate von 20 °C/min.

In einer bevorzugten Ausführungsform weist das aus der ersten Stufe erhaltene Copolymer eine Glasübergangstemperatur von 40 bis 150 °C, bevorzugt 50 bis 120 °C besonders bevorzugt 50 bis 100 °C und das aus der letzten Stufe erhaltene Produkt eine um mindestens 40 °C niedrigere Glasübergangstemperatur auf. Derartige Polymerdispersionen können mit Vorteil in Beschichtungsmassen zur Beschichtung von Substraten eingesetzt werden.

Die Mindestfilmbildetemperatur (MFT) solcher für Beschichtungsmassen eingesetzten Polymer-dispersionen beträgt vorteilhaft nicht mehr als 5 °C. Dabei sind die erhaltenen Filme dennoch nicht klebrig.

Die Bestimmung der Mindestfilmbildetemperatur erfolgt in der Weise, daß die Dispersion auf eine Platte aufgezogen wird, die an einem Ende erwärmt und am anderen gekühlt wird (DIN ISO 2115: 2001-04). Durch visuelle Beurteilung und Temperaturfühler in dichten Abständen längs der Platte läßt sich die mindeste Filmbildetemperatur ermitteln.

Die Polymerdispersionen können als Bindemittel für einkomponentige oder zweikomponentige Beschichtungsmassen, z.B. für Lacke, Schutzüberzüge, Straßenmarkierungen, dekorative Überzüge, Anstrichfarben, Beschichtungen verwendet werden.

Für die unterschiedliche Verwendung können geeignete Hilfsmittel zugesetzt werden, z.B Verlaufsmittel, Verdicker, Entschäumer, Füllstoffe, Pigmente, Dispergierhilfsmittel für Pigmente etc.

Die Beschichtungen können durch Auftragen der Beschichtungsmassen auf geeignete Substrate, wie Holz, Beton, Metall, Glas, Kunststoff, Keramiken, Putze, Stein, Asphalt, Textilien, gestrichene, grundierte oder verwitterte Untergründe erhalten werden.

Bei zweikomponentigen Beschichtungsmassen ist als weitere Komponente ein Vernetzer erforderlich, bei dem es sich beispielsweise um dem Fachmann für diese Zwecke bekannte Polyisocyanate handelt.
Die für die Herstellung der Polyisocyanate eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen. Unter Ersteren werden Isocyanate verstanden, bei denen die Isocyanatogruppen direkt an aromatische Ringsysteme gebunden sind, wohingegen bei Letzteren die Isocyanatogruppen an Alkylengruppen gebunden sind, aber die Verbindungen auch aromatische Ringsysteme enthalten, wie es beispielsweise bei TMXDI der Fall ist.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat), Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1 -methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10.

Dicyclohexylmethan-4,4'-diisocyanat kann ebenfalls als Gemisch der verschiedenen cis- und trans-Isomere vorliegen.

Für die Polyisocyanat können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestem und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate, zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethy-Iendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3 bis 8 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-13 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyallkyl(meth)acrylate und andere Hydroxy-Vinylverbindungen.

In einer bevorzugten Ausführungsform der vorliegenden Erfindung handelt es sich bei den Polyisocyanaten um hydrophil modifizierte Polyisocyanate.

In einer besonders bevorzugten Ausführungsform handelt es sich bei dem Polyisocyanat um Polyisocyanate auf Basis von 1,6-Hexamethylendiisocyanat.

In einer weiteren besonders bevorzugten Ausführungsform handelt es sich bei dem Polyisocyanat um ein Gemisch von Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008/68198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei.

Bei thermisch labilen Katalysatoren ist es weiterhin auch möglich, die Reaktion abzubrechen durch Erhitzen des Reaktionsgemischs auf eine Temperatur oberhalb von mindestens 80°C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.

Als zweite Komponente in Zweikomponenten Beschichtungsmassen können auch Melamin-Formaldehyd-Harze und Harnstoff-Formaldehyd-Harze eingesetzt werden.

Melamin-Formaldehyd-Harze lassen sich nach Anwendungsgebieten (Formmassen, Leime, Tränkharze, Lacke), Alkylierungsstoffen (Veretherung mit Butanol, Methanol, Mischveretherung) oder wie hier aufgeführt nach dem Verhältnis aus Triazin : Formaldehyd : Veretherungsalkohol charakterisieren:
1. vollständig bis hoch methylolierte und vollalkylierte bis hochalkylierte Harze (HMMM-Typen)
2.1 teilmethylolierte und hochalkylierte Harze (High Imino Typen)
2.2. teilmethylolierte und teilalkylierte Harze (Methylol Typen)
3. niedrig methylolierte Harze (Melamin-Formaldehyd-Kondensate)

Die erste große Gruppe der vollständig veretherten Melamin-Formaldehyd-Harze, bei denen das sogenannte Einbaumolverhältnis Melamin:Formaldehyd:Alkohol theoretisch 1:6:6, in der Praxis in der Regel 1:>5,5:>5,0 und meist 1:>5,5:>4,5 beträgt, zeichnen sich durch ein ausgesprochen gutes High solids-Verhalten (relativ niedrige Viskosität bei hohem Feststoffgehalt) aus. Bei dieser Vernetzergruppe lässt sich der freie Form-aldehyd aufgrund der niedrigen Viskosität des Aminoharzes leicht reduzieren. Derzeit erreichbar ist ein Gehalt an freiem Formaldehyd < 0,3 Gew%. Dabei enthalten die Handelsprodukte als Alkohol zumeist Methanol, es sind aber auch gemischtveretherte oder vollständig butylierte Typen bekannt.

Die vollständig veretherten Melamin-Formaldehyd-Harze werden in der Praxis bevorzugt in Beschichtungen von Gebinden (Can-Coating) und Metallbändern (Coil-Coatings) weltweit und in NAFTA auch für alle Schichten der Automobillackierung eingesetzt.

Die geringe thermische Reaktivität bei Einbrennbedingungen, wie 20 Minuten bei 140°C, erfordert für diese vollständig veretherten Melamin-Formaldehyd-Harze die Katalyse mit starken Säuren. Dadurch erhält man eine sehr schnelle Härtung, durch
Umetherung mit dem Bindemittel unter Freisetzung der Veretherungsalkohole ein homogenes Conetzwerk. Mit dieser Katalyse mit starken Säuren sind sehr kurze Aushärtungszeiten, wie bei teilmethylolierten Melamin-Formaldehyd-Harzen möglich. Während der Vernetzung ist eine Formaldehydemission möglich, die deutlich über dem freien Formaldehyd liegt und in der Rückspaltung von Methylolgruppen begründet ist.

Die zweite große Gruppe der teilweise veretherten Melamin-Formaldehyd-Harze, die in der Praxis zumeist ein Einbaumolverhältnis Melamin:Formaldehyd:Alkohol von 1 : 3 bis 5,4 : 2 bis 4,3 zeichnen sich durch eine im Vergleich zur ersten Gruppe deutlich erhöhten thermischen Reaktivität ohne Säurekatalyse aus. Während der Produktion dieser Vernetzer findet eine Eigenkondensation statt, die zu einer höheren Viskosität (geringeres High solids-Verhalten) führt und dadurch die Entfernung des freien Formaldehyd bei der Destillation erschwert. Für diese Produkte sind ein Gehalt an freiem Formaldehyd von 0,5 bis 1,5% Standard, jedoch gibt es auch Produkte mit einem Gehalt an freiem Formaldehyd von 0,3 bis 3 Gew%. Auch hier sind als Handelsprodukte methylierte, butylierte sowie gemischt veretherte Typen weit verbreitet. Die Veretherung mit weiteren Alkylierungsstoffen ist in der Literatur beschrieben bzw. als spezielle Produkte erhältlich.

High-Imino- und Methylol-Typen als jeweilige Untergruppe weisen beide eine unvollständige Methylolierung, d.h. Formaldehyd-Einbaumolverhältnisse von weniger als 1 : 5,5, auf. Die High-Imino-Typen unterscheiden sich von den Methylol-Typen jedoch durch einen hohen Alkylierungsgrad, d.h. dem Anteil der veretherten Methylolgruppen an den eingebauten Formaldehyd-Äquivalenten, von meist bis zu 80 %, wohingegen die Methylol-Typen in der Regel < 70 % aufweisen.

Einsatzgebiete für die teilmethylolierten Melamin-Formaldehyd-Harze erstrecken sich über alle Anwendungsbereiche, auch in Kombination mit HMMM Typen zur Reaktivitätsanpassung, wo Härtungstemperaturen 100 bis 150°C gefordert sind. Eine zusätzliche Katalyse mit Hilfe schwacher Säuren ist möglich und gängige Praxis.

Neben der Reaktion des Aminoharzes mit dem Bindemittel findet ein deutlich erhöhter Anteil an Eigenvemetzung des Vernetzers mit sich selbst statt. Die Folge ist eine reduzierte Elastizität des Gesamtsystems, welche durch die geeignete Auswahl des Kombinationspartners ausgeglichen werden muss. Vorteilhaft dagegen ist die reduzierte Gesamtformaldehydemission aus den daraus hergestellten Beschichtungen.

Neben Aminoharzen, insbesondere Melamin-Formaldehyd-Harzen, mit nur einem Veretherungsalkohol erlangen gemischtveretherte Produkte zunehmend an Bedeutung.

Eine weitere Gruppe des Aminoplastharze, die sich in Aufbau und Eigenschaften sehr ähnlich zu den Melamin-Formaldehyd-Harzen verhalten, sind die Benzoguanaminharze (Benzoguanamin/Formaldehydharze). Freie OH-Gruppen können auch zumindest teilweise mit niederen Alkoholen, besonders C1-C4-Alkoholen, besonders bevorzugt Methanol oder n-Butanol, verethert sein.

Als weitere Aminoplastharze zu nennen sind beispielsweise Harnstoffharze, also Polykondensationsprodukte von Harnstoff und Formaldehyd (Kurzbezeichnung UF, nach DIN EN ISO 1043-1: 2002-6). Freie OH-Gruppen können auch zumindest teilweise mit niederen Alkoholen, besonders C1-C4-Alkoholen, besonders bevorzugt Methanol oder n-Butanol, verethert sein.

Bei den Aminoplastharzen kann es sich bevorzugt um Melamin-Formaldehyd-Harze, Benzoguanamin/Formaldehydharze und Hamstoff/Formaldehydharze handeln, die jeweils optional zumindest teilweise verethert sein können und bevorzugt zumindest teilweise verethert sind.

Besonders bevorzugt handelt es sich um zumindest teilweise veretherte Melamin-Formaldehyd-Harze oder Benzoguanamin/Formaldehydharze, ganz besonders bevorzugt um zumindest teilweise veretherte Melamin-Formaldehyd-Harze.

Erfindungsgemäß als Aminoplastharze einsetzbare Melamin-Formaldehyd-Harze sind beispielsweise wie folgt aufgebaut:
Wie eingangs erwähnt werden Melamin-Formaldehyd-Harze häufig über das Einbaumolverhältnis Melamin:Formaldehyd:Alkohol charakterisiert. Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Erfindungsgemäß einsetzbare Melamin-Formaldehyd-Harze können ein Einbaumolverhältnis 1:2 bis 6:1 bis 6 aufweisen, wobei in Einzelfällen durch Bildung von Oligoformalketten auch ein Formaldehyd-Einbauverhältnis bis zu 8 denkbar sein kann.

Bevorzugt sind Einbaumolverhältnisse von 1:3 bis 6:1,5 bis 6.

Für methylveretherte Melamin-Formaldehyd-Harze sind Einbaumolverhältnisse von 1:3,6 bis 5,7:2,1 bis 4,7 besonders bevorzugt, ganz besonders bevorzugt sind Einbaumolverhältnisse von 1:5 bis 6:3,5 bis 6, insbesondere 1:5 bis 6:4,0 bis 5,0.

Für n-butylveretherte Melamin-Formaldehyd-Harze sind Einbaumolverhältnisse von 1:3,2 bis 5,7:1,3 bis 4 besonders bevorzugt, ganz besonders bevorzugt sind Einbaumolverhältnisse von 1:5 bis 6:3,5 bis 6, insbesondere 1:5 bis 6:3,5 bis 4,5.

Die einsetzbaren Melamin-Formaldehyd-Harze können nicht nur eine Melamingruppe pro Polykondensat aufweisen sondern durchaus auch mehrere, bevorzugt bis zu sechs, besonders bevorzugt bis zu vier, ganz besonders bevorzugt bis zu drei und insbesonders bis zu zwei.

Erfindungsgemäß als Aminoplastharze einsetzbare Benzoguanamin/Formaldehydharze sind beispielsweise wie folgt aufgebaut

Auch Benzoguanamin-Formaldehyd-Harze werden häufig über das Einbaumolverhältnis Benzoguanamin:Formaldehyd:Alkohol charakterisiert. Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Erfindungsgemäß einsetzbare Benzoguanamin-Formaldehyd-Harze können ein Einbaumolverhältnis 1:1,5 bis 4:1 bis 4 aufweisen, wobei in Einzelfällen durch Bildung von Oligoformalketten auch ein Formaldehyd-Einbauverhältnis bis zu 6 denkbar sein kann.

Bevorzugt sind Einbaumolverhältnisse von 1:2 bis 4:1,5 bis 4.

Für methylveretherte Benzoguanamin -Formaldehyd-Harze sind Einbaumolverhältnisse von 1:2,2 bis 3,7:2,1 bis 3,0 besonders bevorzugt, ganz besonders bevorzugt sind Einbaumolverhältnisse von 1:3 bis 4:1,5 bis 4, insbesondere 1:3 bis 4:2,0 bis 3,0.

Für n-butylveretherte Benzoguanamin -Formaldehyd-Harze sind Einbaumolverhältnisse von 1:2,2 bis 3,7:1,3 bis 2 besonders bevorzugt, ganz besonders bevorzugt sind Einbaumolverhältnisse von 1:3 bis 4:1,5 bis 4, insbesondere 1:3 bis 4:1,5 bis 2,5.

Die einsetzbaren Benzoguanamin -Formaldehyd-Harze können nicht nur eine Benzoguanamingruppe pro Polykondensat aufweisen sondern durchaus auch mehrere, bevorzugt bis zu fünf, besonders bevorzugt bis zu vier, ganz besonders bevorzugt bis zu drei und insbesonders bis zu zwei.

Erfindungsgemäß als Aminoplastharze einsetzbare Harnstoff/Formaldehydharze sind beispielsweise wie folgt aufgebaut

Erfindungsgemäß einsetzbare Harnstoff-Formaldehyd-Harze können ein Einbaumolverhältnis von Harnstoff / Formaldehyd / Alkohol von 1: 1-4 : 0,3:3, bevorzugt 1 : 1-3 : 0,4-2, besonders bevorzugt 1 : 1,5-2,5 : 0,5-1,5, ganz besonders bevorzugt von 1: 1,6-2,1 : 0,6-1,3 aufweisen.

Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Zu den Harnstoff/Formaldehyd-Harzen gehören auch sogenannte Glycolurilharze, die durch Umsetzung von Glycoluril, dem Umsetzungsprodukt von Glyoxal mit zwei Äquivalenten Harnstoff, mit Formaldehyd entstehen, optional verethert mit einem oder mehreren Alkoholen.

Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m². Anschließend werden die flüchtigen Bestandteile der Dispersionen entfernt. Dieser Vorgang kann gewünschtenfalls ein- oder mehrfach wiederholt werden.

Zur Entfernung des in der Dispersion enthaltenen Wassers wird nach dem Aufbringen auf das Substrat getrocknet, beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist. Das Trocknen kann bei einer Temperatur von Umgebungstemperatur bis 100 °C über einen Zeitraum von wenigen Minuten bis mehreren Tagen erfolgen.

Insbesondere eignet sich die erfindungsgemäße Polymerdispersion in einer besonderen Ausführungsform als Bindemittel für Lacke und als Bindemittel für Anstrichfarben.

In der Anwendung als Korrosionsschutzlacke können neben der Polymerdispersion noch Korrosionsschutzmittel, wie Korrosionsinhibitoren oder aktive Korrisionsschutzpigmente enthalten sein.

Beispiele für Korrosionsinhibitoren sind aufgeführt in "Corrosion Inhibitors.2nd Edition. An industrial Guide", Ernest W. Flick, Ed: William Andrew Inc ISBN: 978-0-8155-1330-8. Bevorzugte Korrosionsinhibitoren sind Hexamin, Benzotriazol, Phenylenediamin, Dimethylethanolamin, Polyanilin, Natrium Nitrit, Zimtaldehyd, Kondensationsprodukte von Aldehyden und Aminen (Imine), Chromate, Nitrite, Phosphate, Hydrazin und Ascorbinsäure.

Beispiele für Korrosionsschutzpigmente sind modifizierte Zink-Orthophosphate (beispielsweise HEUCOPHOS® ZPA, ZPO and ZMP), Polyphosphate (beispielsweise HEUCOPHOS® ZAPP, SAPP, SRPP and CAPP), WSA - Wide Spectrum Anticorrosives (beispielsweise HEUCOPHOS® ZAMPLUS and ZCPPLUS) und modifizierte Silikat-Pigmente (beispielsweise HEU-COSIL® CTF, Halox® 750), beispielsweise der Firma Heubach GmbH, sowie Bariumborphosphat (beispielsweise Halox® 400), Bariumphosphosilikate (beispielsweise Halox® BW-111, Halox® BW-191), Calciumborosilikate (beispielsweise Halox® CW-291, CW-22/221, CW-2230), Calciumphosphosilikat (beispielsweise Halox® CW-491), Strontiumphosphosilikat (beispielsweise Halox® SW-111) oder Strontiumzinkphoshosilikat (beispielsweise Halox® SZP-391) der Firma Halox®.

Bei der Art des Metalls kann es sich im Prinzip um beliebige Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Mit den Polymerdispersionen werden zum Korrosionsschutz als Substrate die Oberflächen von Eisen, Stahl, Zn, Zn-Legierungen, Al oder Al-Legierungen behandelt. Die Oberfläche können unbeschichtet sein, mit Zink, Aluminium oder deren Legierungen überzogen sein, feuerverzinkt, galvanisch verzinkt, sherardisiert oder mit Primern vorbeschichtet sein.

Insbesondere handelt es sich um die Oberflächen von Eisen, Stahl, Zink, Zinklegierungen, Aluminium oder Aluminiumlegierungen. Stahl kann die Üblichen, dem Fachmann bekannten Legierungskomponenten enthalten. Es kann sich dabei um die Oberflächen von vollständig aus den besagten Metallen bzw. Legierungen bestehenden Körpern handeln. Es kann sich aber auch um die Oberflächen von mit Zn, Zn-Legierungen, Al oder Al-Legierungen beschichteten Körpern handeln, wobei die Körper aus anderen Materialien, beispielsweise aus anderen Metallen, Legierungen, Polymeren oder Verbundwerkstoffen bestehen kann. In einer bevorzugten Ausführungsform der Erfindung handelt es sich um Stahloberflächen oder verzinkte und/oder aluminierte Stahlober-flächen.

Zink- oder Aluminiumlegierungen sind dem Fachmann bekannt. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Der Begriff "Zinklegierung" soll auch Al/Zn-Legierungen einschließen, bei denen Al- und Zn in annähernd gleicher Menge vorhanden sind. Je nach dem gewünschten Anwendungszweck wählt der Fachmann Art und Menge von Legierungsbestandteilen aus. Zn- oder Aluminiumbeschichtungen können auf Stahl beispielsweise durch Schmelztauchverfahren, z.B. Feuerverzinken, oder durch Sherardisieren aufgebracht werden. Sofern das Bauteil immobil ist oder die Bauteilgeometrie es nicht zulässt, können entsprechende Schichten auch mittels thermischem Spritzen (Spritzverzinken, Spritzaluminieren) aufgebracht werden.

Mittels der erfindungsgemäßen Polymerdisperiosnen können insbesondere metallische Oberflächen vor Korrosion geschützt werden, die während des Gebrauchs in Kontakt mit atmosphärischer Luft stehen, es kann sich aber auch um Oberflächen handeln, die während des Gebrauchs in Kontakt mit Wasser, Erdreich oder anderen korrosiven Medien stehen.

Bei den metallischen Oberflächen, die mittels der erfindungsgemäßen Polymerdispersionen und der Beschichtungsmassen vor Korrosion geschützt werden sollen kann es sich prinzipiell um beliebige Oberflächen handeln. Bevorzugt handelt es sich aber um die Oberflächen von metallischen Bauwerken oder Metallkonstruktionen bzw. den dazu benötigten Bauteilen. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Bei einer Ausführungsform der Erfindung kann es sich bei den beschichteten Gegenständen um immobile metallische Konstruktionen wie beispielsweise Gebäude, Brücken, Strommasten, Tanks, Container, Gebäude, Pipelines, Kraftwerke, chemische Anlagen, Schiffe, Kräne, Pfähle, Spundwände, Armaturen, Rohre, Tanks, Fittings, Flansche, Kupplungen, Hallen, Dächer und Baustahl handeln. Bei dieser Ausführungsform werden Korrosionsschutzbeschichtungen üblicherweise an Ort und Stelle aufgestrichen oder aufgespritzt. Dabei kann es sich sowohl um einen Erstsschutz oder um eine Instandsetzung handeln. Die Trocknung und Härtung derartiger Korrosionsschutzbeschichtungen erfolgt unter atmosphärischen Bedingungen also bei Umgebungstemperatur sowie in Gegenwart von Luft und üblicher Luftfeuchtigkeit. Die relative Luftfeuchtigkeit kann beliebig sein, bevorzugt beträgt sie zwischen 10 und 80% und besonders bevorzugt zwischen 30 und 70 %. Je nach dem erforderlichen Schutzgrad wird der Korrosionsschutz von Oberflächen durch Korrosionsschutzanstriche auch als leichter, mittlerer und schwerer Korrosionsschutz bezeichnet.

Soweit möglich ist es jedoch bevorzugt, die erfindungsgemäßen Beschichtungsmassen bei erhöhter Temperatur einzubrennen um so Korrosionsschutzbeschichtungen zu erhalten.

Die erfindungsgemäßen Polymerdispersionen und Beschichtungsmassen können als oder in Zubereitungen zur Behandlung von metallischen Oberflächen verwendete werden.

Dies kann im leichten, mittleren oder schweren Korrosionsschutz beispielsweise durch Aufsprühen oder Aufstreichen erfolgen, wobei der Anstrich anschließend unter atmosphärischen Bedingungen aushärtet. Es können selbstverständlich auch mehrere Anstriche bzw. Beschichtungen gleicher oder verschiedener Zusammensetzung nacheinander aufgebracht werden. Die Gesamtdicke (trocken) derartiger Korrosionsschutzanstriche wird vom Fachmann je nach den gewünschten Eigenschaften der Korrosionsschutzschicht bestimmt. Sie beträgt beispielsweise mindestens 25 µm, in der Regel mindestens 40 µm, bevorzugt mindestens 50 µm, besonders bevorzugt mindestens 60 µm und ganz besonders bevorzugt mindestens 80 µm, insbesondere mindestens 100 µm, speziell mindestens 125 µm, oft mindestens 150 µm und sogar mindestens 175 µm oder mindestens 200 µm. Die obere Grenze für die Gesamtschichtdicke, d.h. die Dicke aller aufgebrachten Korrosionsschutzschichten zusammen, beträgt 2 mm, bevorzugt weniger als 1,5 mm, besonders bevorzugt weniger als 1 mm, ganz besonders bevorzugt weniger als 800 µm und insbesondere weniger als 500 µm.

Die Applikation der erfindungsgemäßen Lacke kann in beliebiger Weise, z. B. durch Streichen oder Spritzen erfolgen.

Die Aushärtemethode richtet sich nach der Natur des Vernetzers und erfolgt in aller Regel unter atmosphärischen Bedingungen.

Die zum Aushärten erforderliche Temperatur richtet sich insbesondere nach dem eingesetzten Vernetzer. Sehr reaktive Vernetzer können bei niedrigeren Temperaturen ausgehärtet werden als weniger reaktive Vernetzer.

Der Begriff "atmosphärischer Korrosionsschutz" bedeutet im Rahmen dieser Erfindung, dass die Beschichtung, die mindestens eine erfindungsgemäße Polymerdispersion enthält, eine Schichtdicke nach Trocknung von mindestens 40 µm, bevorzugt mindestens 50 µm, besonders bevorzugt mindestens 60 µm und ganz besonders bevorzugt mindestens 80 µm und eine Schichtdicke bis zu 2 mm, bevorzugt weniger als 1,5 mm, besonders bevorzugt weniger als 1 mm, ganz besonders bevorzugt weniger als 800 µm und insbesondere weniger als 500 µm, wobei die Beschichtungsmasse nach dem Aufbringen auf die Oberfläche unter üblichen Umgebungsbedingungen, d.h. etwa bei Umgebungs- oder bei Raumtemperatur, in Gegenwart von Luft sowie üblicher Luftfeuchtigkeit ohne die Verwendung zusätzlicher Apparaturen oder Einrichtungen auszuhärten. Typische Härtungstemperaturen betragen je nach der Umgebung mehr als 0 bis 40°C, bevorzugt 5 bis 35°C, besonders bevorzugt 10 bis 30 °C und ganz besonders bevorzugt 15 bis 25°C in Gegenwart von Luft und üblicher Luftfeuchtigkeit. Die relative Luftfeuchtigkeit kann beliebig sein, bevorzugt beträgt sie zwischen 10 und 80% und besonders bevorzugt zwischen 30 und 70 %. Es ist für den Fachmann klar, dass die Zeit bis zum vollständigen Härten ein und desselben Bindemittelsystems je nach den tatsächlich herrschenden Umgebungsbedingungen unterschiedlich sein kann.

In einer weiteren Ausführungsform können die erfindungsgemäßen Polymerdispersionen und Beschichtungsmassen in Klarlacken und sogenannten Direct-to-Metal Beschichtungen eingesetzt werden. Erstere zeichnen sich durch einen Verzicht auf jegliche Pigmente aus, Letztere weisen keine Korrosionsschutzpigmente auf, werden einschichtig auf das Metall aufgetragen und finden insbesondere dann Anwendung, wenn zusätzlich zu einer Korrosionsschutzwirkung noch Chemikalienbeständigkeit oder Glanz gefordert ist. Typische Trockenschichtdicken betragen 15 und 200 µm, bevorzugt 20 bis 100 µm und besonders bevorzugt 20 bis 80 µm.

Die erfindungsgemäßen Beschichtungsmassen, insbesondere die Gemische von Melamin-Formaldehyd-Harzen und den Polymerdispersionen bzw. Harnstoff-Formaldehyd-Harzen und den Polymerdispersionen werden bei einer Temperatur zwischen Raumtemperatur und 200 °C, bevorzugt 100 bis 150 °C über einen Zeitraum von 1 Minute bis 40 Minuten, bevorzugt 10 bis 25 Minuten eingebrannt.

Besonders bevorzugt werden die erfindungsgemäßen Dispersionen und Zubereitungen in Korrosionsschutzmitteln verwendet, die in Korrosivitätskategorien C2 (gemäß DIN EN ISO 12944) oder höher eingesetzt werden, bevorzugt in Korrosivitätskategorien C3 oder höher und besonders bevorzugt in Korrosivitätskategorien C4 oder höher.

Dabei sind die Korrosivitätskategorien gemäß DIN EN ISO 12944 bezogen auf den flächenbezogenen Massenverlust bzw. auf die Dickenabnahme nach dem ersten Jahr der Auslagerung wie folgt bei unlegiertem Stahl bzw. bei Zink definiert:

| | | |
|---|---|---|
| C2 (gering korrosiv): | unlegierter Stahl: | Massenverlust > 10 - 200 g/m² |
| | | Dickenabnahme > 1,3 - 25 µm |
| | Zink: | Massenverlust > 0,7 - 5 g/m² |
| | | Dickenabnahme > 0,1 - 0,7 µm |
| | | |
| C3 (mäßig korrosiv): | unlegierter Stahl: | Massenverlust > 200 - 400 g/m² |
| | | Dickenabnahme > 25 - 50 µm |
| | Zink: | Massenverlust > 5 - 15 g/m² |
| | | Dickenabnahme > 0,7 - 2,1 µm |
| C4 (stark korrosiv): | unlegierter Stahl: | Massenverlust > 400 - 650 g/m² |
| | | Dickenabnahme > 50 - 80 µm |
| | Zink: | Massenverlust > 15 - 30 g/m² |
| | | Dickenabnahme > 2,1 - 4,2 µm |
| | | |
| C5-I/M (sehr stark): | unlegierter Stahl: | Massenverlust > 650 - 1500 g/m² |
| | | Dickenabnahme > 80 - 200 µm |
| | Zink: | Massenverlust > 30 - 60 g/m² |
| | | Dickenabnahme > 4,2 - 8,4 µm |

Anstrichfarben, auch Dispersionsfarben genannt, sind eine der größten Produktgruppen der Lack- und Farbenindustrie (siehe Ullmanns Enzyklopädie der technischen Chemie, 4. Aufl., Band 15, Verlag Chemie, Weinheim 1978, S. 665). Dispersionsfarben enthalten in der Regel als Bindemittel ein filmbildendes Polymer und als farbgebenden Bestandteil wenigstens ein anorganisches Pigment, ferner anorganische Füllstoffe und Hilfsmittel, wie Entschäumer, Verdicker, Netzmittel und gegebenenfalls Filmbildehilfsmittel.

Eine weitere wichtige Eigenschaft der Polymerdispersionen ist die gute Blockfestigkeit der Anstriche, darunter versteht man eine geringe Verklebung des Anstrichfilms mit sich selbst unter Druckbelastung und erhöhter Temperatur (gute Blockfestigkeit).

Die erfindungsgemäßen Anstrichfarben (Dispersionsfarben) enthalten Pigmente und Füllstoffe vorzugsweise in solchen Mengen, daß die Pigment-Volumen-Konzentration (PVK) 10 % bis 85 %, besonders bevorzugt 10 % bis 55 % und ganz besonders bevorzugt 10 bis 40% beträgt. Ferner ist es möglich diese als Klarlacke ohne Pigmente einzusetzen.

Typische Pigmente sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) verwendet. Die Dispersionsfarben können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Zur Erhöhung der Deckkraft und zur Einsparung von Weißpigmenten werden häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponenten bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln einsetzen.

Ein weiterer Gegenstand der vorliegenden Erfindung sind Ein- und Zweikomponenten-Beschichtungsmassen, enthaltend
- mindestens eine erfindungsgemäße Polymerdispersion als Bindemittel,
- optional mindestens ein anderes Bindemittel,
- optional mindestens einen Vernetzer, ausgewählt aus der Gruppe bestehend aus Polyisocyanaten, Melamin-Formaldehyd-Harzen und Harnstoff-Formaldehyd-Harzen,
- optional mindestens ein Pigment,
- optional mindestens einen Korrosionsinhibitor.

Ein weiterer Gegenstand der vorliegenden Erfindung ist die Verwendung derartiger Zweikomponenten-Beschichtungsmassen für den Korrosionsschutz, bevorzugt im leichten, mittleren oder schweren Korrosionsschutz, besonders bevorzugt im mittleren oder schweren Korrosionsschutz.

Die erfindungsgemäßen Polymerdispersionen können zusammen mit einem Vernetzer als Zweikomponenten-Beschichtungsmasse formuliert werden. Beispielsweise können diese Zweikomponenten-Beschichtungsmassen, zusammengesetzt sein wie folgt:
- 20 bis 80 Gew%, bevorzugt 25 bis 70 und besonders bevorzugt 30 bis 50 Gew% der mindestens einen erfindungsgemäßen Polymerdispersion als Bindemittel (bezogen auf den Feststoffgehalt),
- 0 bis 50, bevorzugt 5 bis 40, besonders bevorzugt 10 bis 30 Gew% des optionalen, mindestens einen anderen Bindemittels,
- 20 bis 80 Gew%, bevorzugt 25 bis 70 und besonders bevorzugt 30 bis 50 Gew% des mindestens einen Vernetzers, ausgewählt aus der Gruppe bestehend aus Polyisocyanaten, Melamin-Formaldehyd-Harzen und Harnstoff-Formaldehyd-Harzen,
- 0 bis 50, bevorzugt 10 bis 40, besonders bevorzugt 15 bis 30 Gew% des mindestens einen Pigments,
- 0 bis 10, bevorzugt 0,1 bis 8 und besonders bevorzugt 0,5 bis 5 Gew% des optionalen, mindestens einen Korrosionsinhibitors,
mit der Maßgabe, daß die Summe aller Bestandteile immer 100 Gew% beträgt.

Es ist aber auch möglich, die Polymerdispersionen ohne einen Vernetzer als Einkomponenten-Beschichtungsmasse zu formulieren. In diesem Fall können diese Einkomponenten-Beschichtungsmassen, zusammengesetzt sein wie folgt:
- 20 bis 100 Gew%, bevorzugt 25 bis 90 und besonders bevorzugt 30 bis 80 Gew% der mindestens einen erfindungsgemäßen Polymerdispersion als Bindemittel (bezogen auf den Feststoffgehalt),
- 0 bis 50, bevorzugt 5 bis 40, besonders bevorzugt 10 bis 30 Gew% des optionalen, mindestens einen anderen Bindemittels,
- 0 bis 50, bevorzugt 10 bis 40, besonders bevorzugt 15 bis 30 Gew% des mindestens einen Pigments,
- 0 bis 10, bevorzugt 0,1 bis 8 und besonders bevorzugt 0,5 bis 5 Gew% des optionalen, mindestens einen Korrosionsinhibitors,
mit der Maßgabe, daß die Summe aller Bestandteile immer 100 Gew% beträgt.

Bei den anderen Bindemitteln als die erfindungsgemäßen Polymerdispersionen kann es sich beispielsweise um wasserbasierte, wasserverdünnbare, wassermischbare Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyurethanpolyole.

Bevorzugte OH-Zahlen dieser anderen Bindemittel, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können diese anderen Bindemittel eine Säurezahl gemäß DIN EN ISO 3682 (potentiometrisch) bis 200 mg KOH/g, bevorzugt bis 150 und besonders bevorzugt bis 100 mg KOH/g aufweisen.

Besonders bevorzugte andere Bindemittel sind Polyacrylatpolyole und Polyesterole.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen. Weitere andere Bindemittel sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein.

Optional können die Beschichtungsmassen noch mindestens ein Lösungsmittel enthalten, das bevorzugt als Filmbildehilfsmittel wirkt. Dafür kommen beispielsweise Aromaten, wie Solventnaphtha, Benzol, Toluol, Xylol, oder Gemische von aromatischen Kohlenwasserstoffen, wie sie beispielsweise als Solvesso® 100, 150 oder 200 vertrieben werden, Chlorbenzol, Ester wie Ethylacetat, Butylacetat, Methylglykolacetat, Ethylglykolacetat, Methoxypropylacetat, 2,2,4-Trimethyl-1,3-pentandiol-monoisobutyrat (Texanol® der Firma Eastman), Dipropylenglykol monomethylether acetat, Propylenglykol monoethylether acetat, Propylenglykol monomethylether acetat,
Ether wie Butylglykol, Tetrahydrofuran, Dioxan, Ethylglykolether, Diethylenglykol monoethylether, Diethylenglykol monomethylether, Diethylenglykol mono-n-butylether, Diethylenglykol mono-n-hexylether, Diethylenglykol diethylether, Diethylenglykol dimethylether, Diethylenglykol di-n-butylether, Diethylenglykol di-n-hexylether, Ethylenglykol bis-2-ethyl-hexylether, Ethylenglykol di-n-butylether, Ethylenglykol di-n-hexylether, Ethylenglykol di-n-propylether, Dipropylenglykol dimethylether, Dipropylenglykol monomethylether, Dipropylenglykol mono-n-butylether, Dipropylenglykol mono-n-propylether, Dipropylenglykol mono-tert-butylether, Dipropylenglykol di-tert-butylether, Propylenglykol monoethylether, Propylenglykol monomethylether, Propylenglykol mono-n-propylether, Propylenglykol monophenylether, Propylenglykol mono-tert-butylether, Propylenglykol diphenylether, Propylenglykol mono-n-butylether, Tripropylenglykol monomethylether und Poly(allyl glycidyl ether) Ketone wie Aceton, Methylethylketon, halogenhaltige Lösemittel wie Methylenchlorid oder Trichlormonofluorethan oder andere, wie beispielsweise Benzylalkohol, Dibutylphthalat, Propylenglykol, Tris(butoxyethyl)phosphat
in Betracht.

Die Erfindung soll anhand folgender nicht einschränkender Beispiele erläutert werden.

Der Feststoffgehalt wurde generell bestimmt, indem eine definierte Menge der wässrigen Polymerisatdispersion (ca. 1 g) in einem Aluminiumtiegel mit einem Innendurchmesser von ca. 5 cm bei 140 °C in einem Trockenschrank bis zur Gewichtskonstanz getrocknet wurde. Es wurden zwei separate Messungen durchgeführt. Die in den Beispielen angegebenen Werte stellen den Mittelwert der jeweiligen beiden Messergebnisse dar.

Die Viskosität der erhaltenen Dispersionen wurde dynamisch bei 23 °C und einem Geschwindigkeitsgefälle von 100 s⁻¹ gemäß DIN EN ISO 3219 bestimmt.

### Herstellung wässriger Polymerisatdispersionen

### Beispiel 1 (B1):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 290,9 g | entionisiertes Wasser und |
| 12,0 g | einer 15 gew.-%igen wässrigen Lösung von Natriumlaurylsulfat |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 wurden dem Polymerisationsgemisch 12 g Wasser zugegeben. Danach ließ man das Polymerisationsgemisch noch 10 Minuten bei 80 °C nachreagieren. Daran anschließend wurden dem Polymerisationsgemisch 3,1 g einer 3 gew.-%igen wässrigen Ammoniaklösung zugegeben.

Daran anschließend wurde innerhalb von 90 Minuten bei gleichbleibendem Mengenstrom Zulauf 2 kontinuierlich zudosiert.

Nach Beendigung des Zulaufs 2 wurden dem Polymerisationsgemisch 12 g Wasser zugegeben. Danach ließ man das Polymerisationsgemisch noch 100 Minuten bei 80 °C nachreagieren.

Anschließend wurde die erhaltene wässrige Polymerisatdispersion auf Raumtemperatur abgekühlt, mit 62,9 g entionisiertem Wasser versetzt und über ein 125 µm Filter filtriert.
Zulauf 1 (homogene Mischung aus):

| | |
|---|---|
| 76,2 g | entionisiertes Wasser |
| 3,0 g | einer 15 gew.-%igen wässrigen Lösung von Natriumlaurylsulfat |
| 2,16 g | Ethylhexylthioglycolat |
| 13,5 g | Hydroxyethylmethacrylat |
| 13,5 g | Butylacrylat |
| 13,5 g | Styrol |
| 94,5 g | Methylmethacrylat |

Zulauf 2 (homogene Mischung aus):

| | |
|---|---|
| 124,4g | entionisiertes Wasser |
| 6,0 g | einer 15 gew.-%igen wässrigen Lösung von Natriumlaurylsulfat |
| 157,5 g | n-Butylacrylat |
| 157,5 g | Methylmethacrylat |

Die erhaltene wässrige Polymerisatdispersion wies einen Feststoffgehalt von 42,5 Gew.-% auf. Der gewichtsmittlere Teilchendurchmesser der Polymerisatdispersion betrug 78 nm.
Die erhaltene wässrige Polymerisatdispersion wies eine Hydroxyzahl von 6 mg KOH/g und eine Säurezahl von 0,3 mg KOH/g auf.

### Vergleichsbeispiel 1 (V1):

Die Herstellung des Vergleichsbeispiels 1 erfolgte analog der Herstellung von Beispiel 1 mit dem Unterschied, dass in Zulauf 1 13,5 g Methacrylsäure statt des Hydroxyethylmethacrylat eingesetzt wurde und dass statt 3,1 g einer 3 gew.-%igen wässrigen Ammoniaklösung 5,0 g einer 3 gew.-%igen wässrigen Ammoniaklösung zugegeben wurden.

Die erhaltene wässrige Polymerisatdispersion wies einen Feststoffgehalt von 42,6 Gew.-% auf. Der gewichtsmittlere Teilchendurchmesser der Polymerisatdispersion betrug 74 nm.

Bestimmt man die Wasseraufnahme (Eintauchen der Filme in Wasser über 24 h und Bestimmung der Gewichtsänderung) der freien Filme, die sich durch Ausgießen der Dispersionen in eine Kautschukform und Trocknen bei Raumtemperatur bis zur Gewichtskonstanz erhalten lassen, so zeigt sich, dass die Wasseraufnahme für Beispiel 1 deutlich unter der von Vergleichsbeispiel 1 liegt (für V1 größer 30% bezogen auf Gewicht des trocknen Films, für B1 kleiner als 10 % bezogen auf Gewicht des trocknen Films).

### Beispiel 2 (B2):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 289,6 g | entionisiertes Wasser und |
| 12,0 g | einer 15 gew.-%igen wässrigen Lösung von Natriumlaurylsulfat |
| 1,1 g | einer 25 gew.-%igen wässrigen Ammoniaklösung |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 ließ man das Polymerisationsgemisch noch 10 Minuten bei 80 °C nachreagieren. Danach wurden dem Polymerisationsgemisch 13,5 g einer 2 gew.-%igen wässrigen Ammoniaklösung innerhalb von 10 Minuten bei gleichbleibendem Mengenstrom kontinuierlich zudosiert.

Daran anschließend wurde innerhalb von 90 Minuten bei gleichbleibendem Mengenstrom Zulauf 2 kontinuierlich zudosiert.

Nach Beendigung des Zulaufs 2 wurden dem Polymerisationsgemisch 12 g Wasser zugegeben. Danach ließ man das Polymerisationsgemisch noch 100 Minuten bei 80 °C nachreagieren.

Anschließend wurde die erhaltene wässrige Polymerisatdispersion auf Raumtemperatur abgekühlt, mit 57,8 g einer 18,7 gew.-%igen wässrigen Lösung von Adipinsäuredihydrazid versetzt und über ein 125 µm Filter filtriert.
Zulauf 1 (homogene Mischung aus):

| | |
|---|---|
| 33,0 g | entionisiertes Wasser |
| 3,0 g | einer 15 gew.-%igen wässrigen Lösung von Natriumlaurylsulfat |
| 2,16 g | Ethylhexylthioglycolat |
| 54,0 g | einer 20 gew.-%igen wässrigen Lösung von Diacetonacrylamid |
| 10,8 g | Butandiolmonoacrylat |
| 13,5 g | n-Butylacrylat |
| 13,5 g | Styrol |
| 86,4 g | Methylmethacrylat |

Zulauf 2 (homogene Mischung aus):

| | |
|---|---|
| 116,5 g | entionisiertes Wasser |
| 6,0 g | einer 15 gew.-%igen wässrigen Lösung von Natriumlaurylsulfat |
| 54,0 g | einer 20 gew.-%igen wässrigen Lösung von Diacetonacrylamid |
| 217,8 g | n-Butylacrylat |
| 86,4 g | Methylmethacrylat |

Die erhaltene wässrige Polymerisatdispersion wies einen Feststoffgehalt von 42,5 Gew.-% auf. Der gewichtsmittlere Teilchendurchmesser der Polymerisatdispersion betrug 91 nm. Die Viskosität wurde mit 39 mPas bestimmt.

### Vergleichsbeispiel 2 (V2):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 289,6 g | entionisiertes Wasser und |
| 12,0 g | einer 15 gew.-%igen wässrigen Lösung von Natriumlaurylsulfat |
| 1,1 g | einer 25 gew.-%igen wässrigen Ammoniaklösung |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 150 Minuten bei gleichbleibendem Mengenstrom kontinuierlich zudosiert. Danach wurden dem Polymerisationsgemisch 13,5 g einer 2 gew.-%igen wässrigen Ammoniaklösung innerhalb von 10 Minuten bei gleichbleibendem Mengenstrom kontinuierlich zudosiert.

Daran anschließend wurden dem Polymerisationsgemisch 12 g Wasser zugegeben. Danach ließ man das Polymerisationsgemisch noch 90 Minuten bei 80 °C nachreagieren.

Anschließend wurde die erhaltene wässrige Polymerisatdispersion auf Raumtemperatur abgekühlt, mit 57,8 g einer 18,7 gew.-%igen wässrigen Lösung von Adipinsäuredihydrazid versetzt und über ein 125 µm Filter filtriert.
Zulauf 1 (homogene Mischung aus):

| | |
|---|---|
| 149,5 g | entionisiertes Wasser |
| 9,0 g | einer 15 gew.-%igen wässrigen Lösung von Natriumlaurylsulfat |
| 2,16 g | Ethylhexylthioglycolat |
| 108,0 g | einer 20 gew.-%igen wässrigen Lösung von Diacetonacrylamid |
| 10,8 g | Butandiolmonoacrylat |
| 231,3 g | n-Butylacrylat |
| 13,5 g | Styrol |
| 172,8 g | Methylmethacrylat |

Die erhaltene wässrige Polymerisatdispersion wies einen Feststoffgehalt von 42,6 Gew.-% auf. Der gewichtsmittlere Teilchendurchmesser der Polymerisatdispersion betrug 77 nm. Die Viskosität wurde mit 75 mPas bestimmt.

Mit dieser Polymerisatdispersion wurden, im Gegensatz zu der nach Beispiel 2 hergestellten, lediglich trübe Filme erhalten.

### Beispiel 3 (B3):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 290,9 g | entionisiertes Wasser und |
| 14,4 g | Adeka® Reasoap® SR-1025 (Asahi Denka Co) |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 wurden dem Polymerisationsgemisch 12,0 g entionisiertes Wasser zugegeben. Anschließend ließ man das Polymerisationsgemisch noch 10 Minuten bei 80 °C nachreagieren. Danach wurden dem Polymerisationsgemisch 1,9 g einer 3 gew.-%igen wässrigen Ammoniaklösung innerhalb von 10 Minuten bei gleichbleibendem Mengenstrom kontinuierlich zudosiert.

Daran anschließend wurde innerhalb von 90 Minuten bei gleichbleibendem Mengenstrom Zulauf 2 kontinuierlich zudosiert. 40 Minuten nach Start des Zulaufs 2 wurde parallel zum laufenden Zulauf 2 dem Polymerisationsgemisch 0,9 g einer 3 gew.-%igen wässrigen Ammoniaklösung innerhalb von 10 Minuten bei gleichbleibendem Mengenstrom kontinuierlich zudosiert.

Nach Beendigung des Zulaufs 2 wurden dem Polymerisationsgemisch 12 g Wasser zugegeben. Danach ließ man das Polymerisationsgemisch noch 90 Minuten bei 80 °C nachreagieren. Danach wurden dem Polymerisationsgemisch 1,7 g einer 5 gew.-%igen wässrigen Ammoniaklösung innerhalb von 10 Minuten bei gleichbleibendem Mengenstrom kontinuierlich zudosiert.

Anschließend wurde die erhaltene wässrige Polymerisatdispersion auf Raumtemperatur abgekühlt, mit 40,9 g einer 13,2 gew.-%igen wässrigen Lösung von Adipinsäuredihydrazid versetzt und über ein 125 µm Filter filtriert.
Zulauf 1 (homogene Mischung aus):

| | |
|---|---|
| 33,1 g | entionisiertes Wasser |
| 3,6 g | Adeka® Reasoap® SR-1025 (Asahi Denka Co) |
| 2,16 g | Ethylhexylthioglycolat |
| 54,0 g | einer 20 gew.-%igen wässrigen Lösung von Diacetonacrylamid |
| 10,8 g | Hydroxyethylmethacrylat |
| 13,5 g | Styrol |
| 99,9 g | Methylmethacrylat |

Zulauf 2 (homogene Mischung aus):

| | |
|---|---|
| 162,8 g | entionisiertes Wasser |
| 7,2 g | Adeka® Reasoap® SR-1025 (Asahi Denka Co) |
| 217,8 g | n-Butylacrylat |
| 97,2 g | Methylmethacrylat |

Die erhaltene wässrige Polymerisatdispersion wies einen Feststoffgehalt von 42,6 Gew.-% auf. Der gewichtsmittlere Teilchendurchmesser der Polymerisatdispersion betrug 97 nm. Die Viskosität wurde mit 42 mPas bestimmt.

### Beispiel 4 (B4):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 493,5 g | entionisiertes Wasser und |
| 9,0 g | BASF Lipamin OK |

vorgelegt und unter Rühren auf 70 °C aufgeheizt. Bei Erreichung dieser Temperatur wurde 154,3 g einer 7 gew.-%igen wässrigen Lösung von Azostarter V 50 (Fa. Wako Chemicals GmbH) zugegeben und während fünf Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 wurden dem Polymerisationsgemisch 24,0 g entionisiertes Wasser zugegeben. Anschließend ließ man das Polymerisationsgemisch noch 20 Minuten bei 70 °C nachreagieren.

Daran anschließend wurde innerhalb von 90 Minuten bei gleichbleibendem Mengenstrom Zulauf 2 kontinuierlich zudosiert.

Nach Beendigung des Zulaufs 2 wurden dem Polymerisationsgemisch 24 g Wasser zugegeben. Danach ließ man das Polymerisationsgemisch noch 100 Minuten bei 70 °C nachreagieren.

Anschließend wurde die erhaltene wässrige Polymerisatdispersion auf Raumtemperatur abgekühlt, mit 115,5 g einer 18,7 gew.-%igen wässrigen Lösung von Adipinsäuredihydrazid versetzt und über ein 125 µm Filter filtriert.
Zulauf 1 (homogene Mischung aus):

| | |
|---|---|
| 66,0 g | entionisiertes Wasser |
| 2,25 g | BASF Lipamin® OK |
| 4,32 g | Ethylhexylthioglycolat |
| 108,0 g | einer 20 gew.-%igen wässrigen Lösung von Diacetonacrylamid |
| 21,6 g | Butandiolmonoacrylat |
| 27,0 g | Styrol |
| 172,8 g | Methylmethacrylat |

Zulauf 2 (homogene Mischung aus):

| | |
|---|---|
| 285,9 g | entionisiertes Wasser |
| 4,5 g | BASF Lipamin® OK |
| 108,0 g | einer 20 gew.-%igen wässrigen Lösung von Diacetonacrylamid |
| 435,6 g | n-Butylacrylat |
| 172,8 g | Methylmethacrylat |

Die erhaltene wässrige Polymerisatdispersion wies einen Feststoffgehalt von 41,6 Gew.-% auf. Der gewichtsmittlere Teilchendurchmesser der Polymerisatdispersion betrug 140 nm. Die Viskosität wurde mit 10 mPas bestimmt.

### Beispiel 5 (B5):

Die Herstellung des Beispiels 5 erfolgte analog der Herstellung von Beispiel 1 mit dem Unterschied, dass in Zulauf 1 statt 13,5 g n-Butylacrylat 85,5 g n-Butylacrylat und statt 86,4 g Methylmethacrylat 14,4 g Methylmethacrylat eingesetzt wurden, dass statt 57,8 g einer 18,7 gew.-%igen wässrigen Lösung von Adipinsäuredihydrazid 45,0 g einer 12 gew.-%igen wässrigen Lösung von Adipinsäuredihydrazid eingesetzt wurde und dass Zulauf 2 sich zusammensetzte aus einer homogenen Mischung aus:
159,7 g entionisiertes Wasser
6,0 g einer 15 gew.-%igen wässrigen Lösung von Natriumlaurylsulfat
315,0 g Ethylhexylacrylat.

Die erhaltene wässrige Polymerisatdispersion wies einen Feststoffgehalt von 40,2 Gew.-% auf. Der gewichtsmittlere Teilchendurchmesser der Polymerisatdispersion betrug 93 nm. Die Viskosität der erhaltenen Polymerisatdispersion lag bei 73 mPas. Durch z.B. Aufrakeln der Dispersion auf einer Glasplatte (mittels eines Kastenrakels, 200 µm Filmdicke nass) und Trocknung bei Raumtemperatur über 24 h konnte ein klebriger Film erhalten werden.

### Beispiel 6 (B6):

Die Herstellung des Beispiels 6 erfolgte analog der Herstellung von Beispiel 3 mit dem Unterschied, dass statt 14,4 g Adeka® Reasoap® SR-1025 12,0 g einer 15 gew.-%igen wässrigen Lösung von Natriumlaurylsulfat vorgelegt wurde, dass statt 40,9 g einer 13,2 gew.-%igen wässrigen Lösung von Adipinsäuredihydrazid 48,1 g einer 26,2 gew.-%igen wässrigen Lösung von Adipinsäuredihydrazid eingesetzt wurde, dass sich Zulauf 1 zusammensetzte aus einer homogenen Mischung aus:

| | |
|---|---|
| 77,0 g | entionisiertes Wasser |
| 6,9 g | einer 15 gew.-%igen wässrigen Lösung von Natriumlaurylsulfat |
| 126,0 g | einer 20 gew.-%igen wässrigen Lösung von Diacetonacrylamid |
| 9,0 g | Methacrylamid |
| 25,2 g | Hyroxyethylmethacrylat |
| 22,5 g | Styrol |
| 233,1 g | Methylmethacrylat |

Und Zulauf 2 sich zusammensetzte aus einer homogenen Mischung aus:

| | |
|---|---|
| 64,6 g | entionisiertes Wasser |
| 2,7 g | einer 15 gew.-%igen wässrigen Lösung von Natriumlaurylsulfat |
| 135,0 g | n-Butylacrylat |

Ausserdem wurde als weiterer Unterschied Zulauf 1 statt in 40 min in 90 min gleichmäßig zudosiert, Zulauf 2 statt in 90 min in 40 min gleichmäßig zudosiert. Die Zugaben von je 12,0g entionisiertem Wasser erfolgten im Anschluss an die Zulaufenden von Zulauf 1 und 2, die Zugabe der wässrigen Ammoniaklösung erfolgte im gleichen Abstand zum Reaktionsbeginn wie in Beispiel 3.

Die erhaltene wässrige Polymerisatdispersion wies einen Feststoffgehalt von 42,4 Gew.-% auf. Der gewichtsmittlere Teilchendurchmesser der Polymerisatdispersion betrug 99 nm. Die Viskosität der erhaltenen Polymerisatdispersion lag bei 39 mPas.

### Beispiel 7 (B7):

Die Herstellung des Beispiels 7 erfolgte analog der Herstellung von Beispiel 6 mit dem Unterschied, dass statt 12,0 g einer 15 gew.-%igen wässrigen Lösung von Natriumlaurylsulfat 6,0 g einer 15 gew.-%igen wässrigen Lösung von Natriumlaurylsulfat vorgelegt wurden, in Zulauf 2 statt 64,6 g 71,6 g entionisierte Wasser und statt 2,7 g 1,35 g einer 15 gew.-%igen wässrigen Lösung von Natriumlaurylsulfat eingesetzt wurde und sich Zulauf 1 zusammensetzte aus einer homogenen Mischung aus:

| | |
|---|---|
| 77,0 g | entionisiertes Wasser |
| 3,45 g | einer 15 gew.-%igen wässrigen Lösung von Natriumlaurylsulfat |
| 126,0 g | einer 20 gew.-%igen wässrigen Lösung von Diacetonacrylamid |
| 45,0 g | Hydroxyethylmethacrylat |
| 11,7 g | Styrol |
| 233,1 g | Methylmethacrylat. |

Die erhaltene wässrige Polymerisatdispersion wies einen Feststoffgehalt von 42,7 Gew.-% auf. Der gewichtsmittlere Teilchendurchmesser der Polymerisatdispersion betrug 102 nm. Die Viskosität der erhaltenen Polymerisatdispersion lag bei 23 mPas.

### Beispiel 8 (B8):

Die Herstellung des Beispiels 8 erfolgte analog der Herstellung von Beispiel 3 mit dem Unterschied, dass sich Zulauf 1 zusammensetzte aus einer homogenen Mischung aus:

| | |
|---|---|
| 33,0 g | entionisiertes Wasser |
| 3,0 g | einer 15 gew.-%igen wässrigen Lösung von Natriumlaurylsulfat |
| 2,16 g | Ethylhexylthioglycolat |
| 54,0 g | einer 20 gew.-%igen wässrigen Lösung von Diacetonacrylamid |
| 21,6 g | Hydroxyethylmethacrylat |
| 18,0 g | Glycidylmethacrylat |
| 13,5 g | Styrol |
| 71,1 g | Methylmethacrylat |

Eine Probennahme erbrachte, daß das Produkt der ersten Stufe ein gewichtsmittleres Molekulargewicht Mw von 13.900 g/mol und einen gewichtsmittleren Teilchendurchmesser von 60 nm aufwies.

Und Zulauf 2 sich zusammensetzte aus einer homogenen Mischung aus:

| | |
|---|---|
| 159,7 g | entionisiertes Wasser |
| 6,0 g | einer 15 gew.-%igen wässrigen Lösung von Natriumlaurylsulfat |
| 315,0 g | n-Butylacrylat |

Die erhaltene wässrige Polymerisatdispersion wies einen Feststoffgehalt von 43,1 Gew.-% auf. Der gewichtsmittlere Teilchendurchmesser der Polymerisatdispersion betrug 143 nm. Die Viskosität der erhaltenen Polymerisatdispersion lag bei 21 mPas. Die erhaltene Polymerisatdispersion wies ein gewichtsmittleres Molekulargewicht bezogen auf den Solanteil von ca. 204000 g/mol auf.

### Beispiel 9 (B9):

Die Herstellung des Beispiels 9 erfolgte analog der Herstellung von Beispiel 8 mit dem Unterschied, dass in Zulauf 1 statt 21,6 g Hydroxyethylmethacrylat 21,6 g Hydroxyethylacrylat eingesetzt wurde.

Die erhaltene wässrige Polymerisatdispersion wies einen Feststoffgehalt von 42,9 Gew.-% auf. Der gewichtsmittlere Teilchendurchmesser der Polymerisatdispersion betrug 153 nm. Die Viskosität der erhaltenen Polymerisatdispersion lag bei 22 mPas.

### Beispiel 10 (B10):

Die Herstellung des Beispiels 10 erfolgte analog der Herstellung von Beispiel 8 mit dem Unterschied, dass Zulauf 1 zusammensetzte aus einer homogenen Mischung aus:

| | |
|---|---|
| 5,5 g | entionisiertes Wasser |
| 0,51 g | einer 15 gew.-%igen wässrigen Lösung von Natriumlaurylsulfat |
| 0,36 g | Ethylhexylthioglycolat |
| 9,0 g | einer 20 gew.-%igen wässrigen Lösung von Diacetonacrylamid |
| 1,8 g | Hydroxyethylmethacrylat |
| 1,5 g | Glycidylmethacrylat |
| 2,25 g | Styrol |
| 15,2 g | Methylmethacrylat |

Und Zulauf 2 sich zusammensetzte aus einer homogenen Mischung aus:

| | |
|---|---|
| 214,8 g | entionisiertes Wasser |
| 8,1 g | einer 15 gew.-%igen wässrigen Lösung von Natriumlaurylsulfat |
| 427,5 g | n-Butylacrylat |

Ausserdem wurde als weiterer Unterschied Zulauf 1 statt in 40 min in 5 min gleichmäßig zudosiert, Zulauf 2 statt in 90 min in 125 min gleichmäßig zudosiert. Die Zugaben der je 12,0g entionisiertes Wasser erfolgten im Anschluss an die Zulaufenden von Zulauf 1 und 2, die Zugaben der wässrigen Ammoniaklösung erfolgten im gleichen Abstand zum Reaktionsbeginn wie in Beispiel 3, ausserdem wurde statt 40,9 g einer 13,2 gew.-%igen wässrigen Lösung von Adipinsäuredihydrazid 36,4 g einer 2,5 gew.-%igen wässrigen Lösung von Adipinsäuredihydrazid eingesetzt.

Die erhaltene wässrige Polymerisatdispersion wies einen Feststoffgehalt von 43,0 Gew.-% auf. Der gewichtsmittlere Teilchendurchmesser der Polymerisatdispersion betrug 128 nm. Die Viskosität der erhaltenen Polymerisatdispersion lag bei 23 mPas.

### Beispiel 11

Die Herstellung des Beispiels 11 erfolgte analog der Herstellung von Beispiel 7 mit dem Unterschied, dass sich Zulauf 1 zusammensetzte aus einer homogenen Mischung aus:

| | |
|---|---|
| 178 g | entionisiertes Wasser |
| 3,45 g | einer 15 gew.-%igen wässrigen Lösung von Natriumlaurylsulfat |
| 25.2 g | 100 % Diacetonacrylamid (in dem angegebenen Wasser gelöst) |
| 45,0 g | 2-Hydroxyethylmethacrylat |
| 11,7 g | Styrol |
| 229 g | Methylmethacrylat |
| 4,50 g | Glycidylmethacrylat |

Die erhaltene wässrige Polymerisatdispersion wies einen Feststoffgehalt von 42,1 Gew.-% auf. Der gewichtsmittlere Teilchendurchmesser der Polymerisatdispersion betrug 89 nm. Eine Probennahme nach Zulauf 1 erbrachte, daß das Produkt der ersten Stufe ein gewichtsmittleres Molekulargewicht Mw von 151.000 g/mol aufwies.

### Beispiel 12

Die Herstellung des Beispiels 12 erfolgte analog der Herstellung von Beispiel 7 mit dem Unterschied, dass sich Zulauf 1 zusammensetzte aus einer homogenen Mischung aus:

| | |
|---|---|
| 178 g | entionisiertes Wasser |
| 3,45 g | einer 15 gew.-%igen wässrigen Lösung von Natriumlaurylsulfat |
| 25,2 g | 100 % Diacetonacrylamid (in dem angegebenen Wasser gelöst) |
| 45,0 g | 2-Hydroxyethylmethacrylat |
| 11,7 g | Styrol |
| 232 g | Methylmethacrylat |
| 0,90 g | Allylmethacrylat |

Die erhaltene wässrige Polymerisatdispersion wies einen Feststoffgehalt von 42,0 Gew.-% auf. Der gewichtsmittlere Teilchendurchmesser der Polymerisatdispersion betrug 98 nm. Eine Probennahme nach Zulauf 1 erbrachte, daß das Produkt der ersten Stufe ein gewichtsmittleres Molekulargewicht Mw von 100.000 g/mol aufwies.

### Beispiel 13

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 456 g | entionisiertes Wasser und |
| 6,30 g | einer 10 % igen Natronlauge |

vorgelegt und unter Rühren auf 80 °C aufgeheizt. Bei Erreichung dieser Temperatur wurde 17,1 g einer 21 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 ließ man das Polymerisationsgemisch noch 10 Minuten bei 80 °C nachreagieren. Danach wurden dem Polymerisationsgemisch 5,40 g einer 5 gew.-%igen wässrigen Ammoniaklösung innerhalb von 10 Minuten bei gleichbleibendem Mengenstrom kontinuierlich zudosiert.

Daran anschließend wurde innerhalb von 90 Minuten bei gleichbleibendem Mengenstrom Zulauf 2 kontinuierlich zudosiert.

Nach Beendigung des Zulaufs 2 wurden dem Polymerisationsgemisch 12 g Wasser zugegeben. Danach ließ man das Polymerisationsgemisch noch 100 Minuten bei 80 °C nachreagieren.

Anschließend wurde die erhaltene wässrige Polymerisatdispersion auf Raumtemperatur abgekühlt, mit 90,0 g einer 12 gew.-%igen wässrigen Lösung von Adipinsäuredihydrazid versetzt und über ein 125 µm Filter filtriert.
Zulauf 1 (homogene Mischung aus):

| | |
|---|---|
| 2,16 g | Ethylhexylthioglycolat |
| 10.8 g | Diacetonacrylamid |
| 10,8 g | 4-Hydroxybutylacrylat |
| 13,5 g | Styrol |
| 86,4 g | Methylmethacrylat |
| 13,5 g | n-Butylacrylat |

Zulauf 2 (homogene Mischung aus):

| | |
|---|---|
| 217,8 g | n-Butylacrylat |
| 86,4 g | Methylmethacrylat |
| 10,8 g | Diacetonacrylamid |

Die erhaltene wässrige Polymerisatdispersion wies einen Feststoffgehalt von 43,7 Gew.-% und einen pH von 6,1 auf. Der gewichtsmittlere Teilchendurchmesser der Polymerisatdispersion betrug 174 nm.

### Beispiel 14

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 764 g | entionisiertes Wasser und |
| 37,3 g | einer 15 gew.-%igen wässrigen Lösung von Natriumlaurylsulfat und |
| 3,36 g | einer 25 gew.-%igen wässrigen Ammoniaklösung |

vorgelegt und unter Rühren auf 80 °C aufgeheizt. Bei Erreichung dieser Temperatur wurde 160 g einer 7 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 ließ man das Polymerisationsgemisch noch 10 Minuten bei 80 °C nachreagieren. Danach wurden dem Polymerisationsgemisch 42,0 g einer 2 gew.-%igen wässrigen Ammoniaklösung innerhalb von 10 Minuten bei gleichbleibendem Mengenstrom kontinuierlich zudosiert.

Daran anschließend wurde innerhalb von 90 Minuten bei gleichbleibendem Mengenstrom Zulauf 2 kontinuierlich zudosiert.

Nach Beendigung des Zulaufs 2 ließ man das Polymerisationsgemisch noch 100 Minuten bei 80 °C nachreagieren.

Anschließend wurde die erhaltene wässrige Polymerisatdispersion auf Raumtemperatur abgekühlt, mit 280 g einer 12 gew.-%igen wässrigen Lösung von Adipinsäuredihydrazid versetzt und über ein 125 µm Filter filtriert.
Zulauf 1 (homogene Mischung aus):

| | |
|---|---|
| 234 g | entionisiertes Wasser |
| 9,33 g | einer 15 gew.-%igen wässrigen Lösung von Natriumlaurylsulfat |
| 33,6 g | 100 % Diacetonacrylamid (in dem angegebenen Wasser gelöst) |
| 33,6 g | 4-Hydroxybutylacrylat |
| 42,0 g | Styrol |
| 269 g | Methylmethacrylat |
| 33,6 g | n-Butylacrylat |

Zulauf 2 (homogene Mischung aus):

| | |
|---|---|
| 507 g | entionisiertes Wasser |
| 18,7 g | einer 15 gew.-%igen wässrigen Lösung von Natriumlaurylsulfat |
| 33,6 g | 100 % Diacetonacrylamid (in dem angegebenen Wasser gelöst) |
| 678 g | n-Butylacrylat |
| 269 g | Methylmethacrylat |

Die erhaltene wässrige Polymerisatdispersion wies einen Feststoffgehalt von 41,7 Gew.-% und einen pH von 9,5 auf. Der gewichtsmittlere Teilchendurchmesser der Polymerisatdispersion betrug 120 nm.

### Anwendungsbeispiele

### Applikation der Korrosionsschutz-Lacke / Vorbereitung für den Salzsprühtest

Die zu prüfenden Formulierungen wurden mit vollentsalztem (VE)-Wasser auf die gewünschte Viskosität verdünnt und auf ein gereinigtes Tiefziehblech (200 x 80 x 0,9 mm) mit einem Kastenrakel aufgezogen; die Spaltgröße wird dabei so gewählt, dass sich eine Trockenschichtdicke von 60-85 µm ergibt. Nach Trocknung wird zum Schutz vor Korrosion die Rückseite des Prüfblechs mit einem lösemittel-basierten Lack beschichtet sowie die Kanten mit Tesa-Film abgeklebt. Abschließend wird das Prüfblech auf der mit der zu testenden Grundierung beschichteten Seite mit einem Ritzstachel bis auf das Substrat geritzt. Bei Klarlacken wurde keine Ritzung durchgeführt.

### Klarlacke (1 K)

Formulierung F1: 100 g Dispersion, 9 g Butyldiglykol, 0,15 g BYK® 346, 0,65 g 1:1-Mischung aus VE-Wasser und Korrosionsinhibitor L1 (Flash-Rust-Inhibitor).

Formulierung F2 (ohne Filmbildehilfsmittel): 100 g Dispersion, 0,15 g BYK 346, 0,65 g 1:1-Mischung aus VE-Wasser und Korrosionsinhibitor L1 (Flash-Rust-Inhibitor)

| Dispersion | Formulierung | Stunden im Salzsprühtest bis zum Schadenseintritt |
|---|---|---|
| Besipiel 14 | F1 | 720 h |
| Beispiel 14 | F2 | 720 h |
| Joncryl® OH 8312 | F1 | 24 h |
| Joncryl® OH 8312 | F2 | keine geeignete Verfilmung ohne Lösungsmittel |
| Acronal® PRO761 | F1 | 680 h |
| Acronal® PRO761 | F2 | keine geeignete Verfilmung ohne Lösungsmittel |
| Worlee Cryl® 7137 | F1 | 170 h |
| Worlee Cryl® 7137 | F2 | keine geeignete Verfilmung ohne Lösungsmittel |

Bei Acronal® PRO 761 der BASF handelt es sich um eine selbstvernetzende Styrolacrylatdispersion mit einem Festkörpergehalt von etwa 50 Gew%, Viskosität bei 23 °C (Brookfield) ca 325 mPa.s, pH etwa 9.3 und einer Minimalen Filmbildetemperatur von etwa 22 °C.

Joncryl® 8312 der BASF ist eine Styrolacrylatdispersion, Festkörpergehalt 45 % (in Wasser), Viskosität bei 25 °C (Brookfield) 360 mPa.s, Hydroxylzahl 100 mg/KOH/g, pH etwa 2.7, Säuregehalt (bezogen auf Feststoff) 9 und einer Minimalen Filmbildetemperatur von etwa 48 °C.

WorleeCryl® 7137 der Firma Worlée ist eine Styrolacrylatdispersion mit einem nichtflüchtigen Anteil gemäß DIN EN ISO 3251 von 42 % ± 1, pH-Wert (DIN ISO 976) von 7,5 - 8,5, Viskosität bei 20 °C, Brookfield (DIN EN ISO 2555) max. 200 mPa· s mit einem anionischen Emulgatorsystem, Minimale Filmbildungstemperatur (ISO 2115) ca. 28 °C.

### Klarlacke (2K)

Beispiel B1 (mit Vernetzer): 100 g Dispersion Beispiel 14, 9 g Butyldiglykol, 0,15 g BYK® 346, 0,65 g 1:1-Mischung aus VE-Wasser und Korrosionsinhibitor L1 (Flash-Rust-Inhibitor). Dazu wurde als Vernetzer Luwipal® 072 (methanolverethertes Melamin-Formaldehyd-Harz in iso-Butanol der BASF, Ludwigshafen, 73 - 77% nichtflüchtiger Anteil, Säurezahl < 1 mg KOH/g, Gehalt an freiem Formaldehyd ≤ 1,0 Gew%) benutzt, Verhältnis zur Dispersion: 7 Teile Dispersion, 3 Teile Vernetzer (fest auf fest)

Vergleichbeispiel VB1 (ohne Vemetzer): 100 g Dispersion Beispiel 14, 0,15 g BYK® 346, 0,65 g 1:1-Mischung aus VE-Wasser und Korrosionsinhibitor L1 (Flash-Rust-Inhibitor)

Trocknung: 20 min bei 130°C + 7 Tage bei Raumtemperatur

| | Beispiel B1 | Vergleichbeispiel VB1 |
|---|---|---|
| Aceton Doppelhübe | >200 | 90 |
| Glanz (20/60°) | 89 / 95 | 27 / 71 |
| Haze | 45 | 490 |
| Pendeldämpfung nach 7 / 14 Tagen | 29 / 30 | 7 / 7 |
| Stunden im Salzsprühtest bis zum Schadenseintritt | 720 | 720 |

### Pigmentierte Systeme

### Formulierung F3:

401,77 g wässrige Polymerdispersion aus Beispiel 14 (41,7% Feststoffgehalt) werden mit 1,32 g BYK® 022 (Entschäumer der Firma Byk) versetzt, anschließend wird mittels eines Dispermaten eine Mischung bestehend aus 0,36 g Lutensit® A-EP (Dispergiermittel der Firma BASF), 6,6 g konz. Ammoniak und 35,16 g Wasser zugegeben. Unter Rühren wird eine Mischung aus 4,32 g Phenoxypropanol (Filmbildehilfsmittel) und 4,32 g Benzin 180-210°C (Filmbildehilfsmittel) eingearbeitet. Anschließend werden 51 g Bayferrox® 130 M (Eisenoxid-Pigment der Firma Bayer), 21,6 g Talkum 20 M 2 (Füllstoff), 38,3 g Calcium Carbonat sowie 76,68 g Litopone® L (30% ZnS) (Füllstoff auf Basis Bariumsulfat + Zinksulfid) zugegeben. Die gesamte Mischung wird für mindestens 30 Minuten mit Glasperlen (ø 3mm) dispergiert. Daraufhin werden unter weiterem Rühren weitere 1,14 g BYK® 022 sowie 2,22 g einer 1:1-Mischung aus VE-Wasser und Korrosionsinhibitor L1 (Flash-Rust-Inhibitor) zugegeben und die Glasperlen abgesiebt. Zum Abschluss wird der Ansatz mit einer Mischung aus 2,22 g Collacral® PU 85 (25%) (Verdicker auf Polyurethan-Basis) und 7,92 g Butylglykol (Lösungsmittel) versetzt sowie gegebenenfalls der pH-Wert mit konz. Ammoniak auf ca. 9,5 nachgestellt. Man erhält eine Korrosionsschutz-Grundierung mit einer Pigment/Volumen-Konzentration (PVK) von 23%.

Formulierung F4: analog zu F3 aber ohne Filmbildehilfsmittel Phenoxypropanol und Benzin 180-210°C

Formulierung F5: analog zu F3 aber mit Joncryl® 1522 anstatt der Dispersion aus Beispiel 14. Joncryl® 1522 hat einen Festoffgehalt von 45,1 % und die Formulierung wurde so angepasst, dass die gleiche Polymer-Menge wie in Formulierungen F3 und F4 erhalten wurde. Daher wurden in F5 372,37 g Joncryl® 1522 benutzt. Der Rest der Formulierung ist gleich geblieben.

| Dispersion | Formulierung | Stunden im Salzsprühtest bis zum Schadenseintritt |
|---|---|---|
| Beispiel 14 | F3 | 410 |
| Beispiel 14 | F4 | 510 |
| Joncryl 1522 | F5 | 72 |

Joncryl® 1522 der BASF ist eine Polymerdispersion mit einem Festkörpergehalt von 45%, pH 9.0 und einer Viskosität von 400 mPas, Glasübergangstemperatur etwa 34 °C und einer Minimalen Filmbildetemperatur von etwa 26 °C.

## Patentansprüche

1. Ein- und Zweikomponenten-Beschichtungsmasse, enthaltend
- mindestens eine Polymerdispersion, erhältlich durch mindestens zweistufige Emulsionspolymerisation von
in einer ersten Stufe Umsetzung
(A1) mindestens eines (Meth)acrylsäurealkylesters,
(B1) optional mindestens eines Vinylaromaten mit bis zu 20 C-Atomen,
(C1) mindestens eines Hydroxyalkyl(meth)acrylats,
(D1) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E1) optional mindestens einer α,β-ethylenisch ungesättigten Carbonsäure,
(F1) optional mindestens einem Vernetzer,
(G1) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H1) optional mindestens einer Verbindung mit einer (Meth)acrylat- und einer Epoxygruppe und
(I1) optional mindestens einem α,β-ethylenisch ungesättigten Carbonsäureamid,
in Gegenwart mindestens eines Initiators und optional in Gegenwart mindestens eines Emulgators sowie optional in Gegenwart mindestens eines Reglers,
mit der Maßgabe, daß das aus der ersten Stufe erhaltene Copolymer
- eine Säurezahl von nicht mehr als 10 mg KOH/g Polymer,
- eine Hydroxyzahl von 2 bis 100 mg KOH/g Polymer,
- eine Teilchengröße von 20 bis 350, bevorzugt 30 bis 300 nm und
- ein gewichtsmittleres Molekulargewicht von 5.000 bis 200.000 g/mol aufweist,
und die Summe der Monomere (C1) und (I1) von 0,5 bis 20 Gew% beträgt,
gefolgt von einer radikalischen Polymerisation in einer Folgestufe in Gegenwart des in der ersten Stufe hergestellten Copolymers von
(A2) mindestens einem (Meth)acrylsäurealkylester,
(B2) optional mindestens einem Vinylaromaten mit bis zu 20 C-Atomen,
(C2) optional mindestens einem Hydroxyalkyl(meth)acrylat,
(D2) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E2) optional mindestens einer α,β-ethylenisch ungesättigten Carbonsäure,
(F2) optional mindestens einem Vernetzer und
(G2) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H2) optional mindestens einer Verbindung mit einer (Meth)acrylat- und einer Epoxygruppe und
(I2) optional mindestens einem α,β-ethylenisch ungesättigten Carbonsäureamid, optional gefolgt von einer oder mehreren weiteren Stufen einer radikalischen Polymerisation mindestens eines Monomeren,
wobei die Menge des mindestens einen Emulgators 0 bis 3,5 Gew% beträgt, bezogen auf die Gesamtmenge der in allen Stufen in die radikalische Polymerisation eindosierten radikalisch polymerisierbaren Monomere,
mit der Maßgabe, daß
- das Gewichtsverhältnis der Summe der Monomere der ersten Stufe (A1) bis (I1) zur Summe der Monomere der Folgestufen (A2) bis (I2) von 5:95 bis 70:30 beträgt,
- das aus der letzten Stufe erhaltene Produkt eine Teilchengröße von 50 bis 500 nm aufweist,
- die Säurezahl des Produktes der letzten Stufe nicht höher ist als die Säurezahl des Produktes der ersten Stufe und
- die Hydroxyzahl des Produktes der letzten Stufe nicht höher ist als die Hydroxyzahl des Produktes der ersten Stufe
- optional mindestens ein anderes Bindemittel,
- optional mindestens einen Vernetzer, ausgewählt aus der Gruppe bestehend aus Polyisocyanaten und Melamin-Formaldehyd-Harzen,
- optional mindestens ein Pigment,
- optional mindestens einen Korrosionsinhibitor.

2. Beschichtungsmasse gemäß Anspruch 1, **dadurch gekennzeichnet, daß** das Monomer (A2) ausgewählt aus der Gruppe bestehend aus Methylmethacrylat, Methylacrylat, Ethylacrylat, n-Butylacrylat, 2-Ethylhexylacrylat und 3-Propylheptylacrylat.

3. Beschichtungsmasse gemäß einem der vorstehenden Ansprüche, **dadurch gekennzeichnet, daß** das Monomer (B2) ausgewählt aus der Gruppe bestehend aus Styrol und α-Methylstyrol.

4. Beschichtungsmasse gemäß einem der vorstehenden Ansprüche, **dadurch gekennzeichnet, daß** das Monomer (C1) ausgewählt aus der Gruppe bestehend aus (Meth)acrylsäure-2-hydroxyethylester, (Meth)acrylsäure-2-hydroxypropylester und (Meth)acrylsäure-3-hydroxypropylester.

5. Beschichtungsmasse gemäß einem der vorstehenden Ansprüche, **dadurch gekennzeichnet, daß** ein Monomer (G1) anwesend ist und es sich dabei um Diacetonacrylamid handelt.

6. Beschichtungsmasse gemäß einem der vorstehenden Ansprüche, **dadurch gekennzeichnet, daß** es sich bei dem Emulgator um einen ionischen, bevorzugt um einen anionischen Emulgator handelt.

7. Beschichtungsmasse gemäß einem der vorstehenden Ansprüche, **dadurch gekennzeichnet, daß** sie eine Mindestfilmbildetemperatur von nicht mehr als 5 °C aufweist.

8. Beschichtungsmasse gemäß einem der vorstehenden Ansprüche, **dadurch gekennzeichnet, daß** das aus der ersten Stufe erhaltene Copolymer eine Glasübergangstemperatur von 40 bis 150 °C und das aus der zweiten Stufe erhaltene Produkt eine um mindestens 40 °C niedrigere Glasübergangstemperatur aufweist.

9. Beschichtungsmasse gemäß einem der Ansprüche 1 bis 7, **dadurch gekennzeichnet, daß** das aus der ersten Stufe erhaltene Copolymer eine Glasübergangstemperatur von nicht mehr als 0 °C und das aus der zweiten Stufe erhaltene Produkt eine Glasübergangstemperatur von nicht mehr als 0 °C aufweist.

10. Beschichtungsmasse gemäß einem der vorstehenden Ansprüche, **dadurch gekennzeichnet, daß** es sich bei dem Vernetzer um ein hydrophil modifiziertes Polyisocyanat handelt.

11. Beschichtungsmasse gemäß einem der vorstehenden Ansprüche, **dadurch gekennzeichnet, daß** es sich bei dem Vernetzer um ein Melamin-Formaldehyd-Harz, ausgewählt aus der Gruppe bestehend aus vollständig bis hoch methylolierten und vollalkylierten bis hochalkylierten Harzen, teilmethylolierten und hochalkylierten Harzen und niedrig methylolierten Harzen.

12. Verwendung von Beschichtungsmassen gemäß einem der vorstehenden Ansprüche zur Beschichtung von Metallen und Legierungen.

13. Verwendung von Beschichtungsmassen gemäß Anspruch 1 bis 11 im leichten, mittleren oder schweren Korrosionsschutz.

## Claims

1. A one- and two-component coating composition comprising at least one polymer dispersion, obtainable by at least two-stage emulsion polymerization of
in a first stage, reacting
(A1) at least one alkyl (meth)acrylate, (B1) optionally at least one vinyl aromatic having up to 20 carbon atoms,
(C1) at least one hydroxyalkyl (meth)acrylate, (D1) optionally at least one free-radically polymerizable compound selected from the group consisting of ethylenically unsaturated nitriles having up to 20 carbon atoms, vinyl esters of carboxylic acids comprising up to 20 carbon atoms, vinyl halides having up to 10 carbon atoms and vinyl ethers of alcohols comprising 1 to 10 carbon atoms,
(E1) optionally at least one α,β-ethylenically unsaturated carboxylic acid,
(F1) optionally at least one cross-linker,
(G1) optionally at least one compound selected from the group consisting of 2-(2-oxoimidazolidin-1-yl)ethyl (meth)acrylate (ureidoethyl (meth)acrylate), acetoacetoxyethyl acrylate, acetoacetoxypropyl methacrylate, acetoacetoxybutyl methacrylate, 2-(acetoacetoxy)ethyl methacrylate, diacetone acrylamide (DAAM) and diacetone methacrylamide,
(H1) optionally at least one compound having a (meth)acrylate group and an epoxy group and
(I1) optionally at least one α,β-ethylenically unsaturated carboxamide,
in the presence of at least one initiator and optionally in the presence of at least one emulsifier and also optionally in the presence of at least one regulator,
with the proviso that the copolymer obtained from the first stage has
- an acid number of not more than 10 mg KOH/g of polymer
- a hydroxyl number of 2 to 100 mg KOH/g of polymer
- a particle size of 20 to 350 nm, preferably 30 to 300 nm and
- a weight-average molecular weight of 5000 to 200 000 g/mol
and the sum of the monomers (C1) and (I1) is from 0.5 to 20% by weight,
followed by a free-radical polymerization in a subsequent stage, in the presence of the copolymer prepared in the first stage, of
(A2) at least one alkyl (meth)acrylate, (B2) optionally at least one vinyl aromatic having up to 20 carbon atoms,
(C2) optionally at least one hydroxyalkyl (meth)acrylate,
(D2) optionally at least one free-radically polymerizable compound selected from the group consisting of ethylenically unsaturated nitriles having up to 20 carbon atoms, vinyl esters of carboxylic acids comprising up to 20 carbon atoms, vinyl halides having up to 10 carbon atoms and vinyl ethers of alcohols comprising 1 to 10 carbon atoms,
(E2) optionally at least one α,β-ethylenically unsaturated carboxylic acid,
(F2) optionally at least one cross-linker and
(G2) optionally at least one compound selected from the group consisting of 2-(2-oxoimidazolidin-1-yl)ethyl (meth)acrylate (ureidoethyl (meth)acrylate), acetoacetoxyethyl acrylate, acetoacetoxypropyl methacrylate, acetoacetoxybutyl methacrylate, 2-(acetoacetoxy)ethyl methacrylate, diacetone acrylamide (DAAM) and diacetone methacrylamide,
(H2) optionally at least one compound having a (meth)acrylate group and an epoxy group and
(I2) optionally at least one α,β-ethylenically unsaturated carboxamide,
optionally followed by one or more further stages of a free-radical polymerization of at least one monomer,
wherein the amount of the at least one emulsifier is 0 to 3.5% by weight, based on the total amount of the free-radically polymerizable monomers metered into the free-radical polymerization in all the stages,
with the proviso that
- the weight ratio of the sum of the monomers of the first stage (A1) to (I1) to the sum of the monomers of the subsequent stages (A2) to (I2) is from 5:95 to 70:30,
- the product obtained from the last stage has a particle size of 50 to 500 nm,
- the acid number of the product of the last stage is not higher than the acid number of the product of the first stage and
- the hydroxyl number of the product of the last stage is not higher than the hydroxyl number of the product of the first stage
- optionally at least one other binder,
- optionally at least one cross-linker, selected from the group consisting of polyisocyanates and melamine-formaldehyde resins,
- optionally at least one pigment,
- optionally at least one corrosion inhibitor.

2. The coating composition according to claim 1, wherein the monomer (A2) is selected from the group consisting of methyl methacrylate, methyl acrylate, ethyl acrylate, n-butyl acrylate, 2-ethylhexyl acrylate and 3-propylheptyl acrylate.

3. The coating composition according to either of the preceding claims, wherein the monomer (B2) is selected from the group consisting of styrene and α-methylstyrene.

4. The coating composition according to any of the preceding claims, wherein the monomer (C1) is selected from the group consisting of 2-hydroxyethyl (meth)acrylate, 2-hydroxypropyl (meth)acrylate and 3-hydroxypropyl (meth)acrylate.

5. The coating composition according to any of the preceding claims, wherein a monomer (G1) is present and it is diacetoneacrylamide.

6. The coating composition according to any of the preceding claims, wherein the emulsifier is an ionic, preferably anionic, emulsifier.

7. The coating composition according to any of the preceding claims, wherein said coating composition has a minimum film-forming temperature of not more than 5°C.

8. The coating composition according to any of the preceding claims, wherein the copolymer obtained from the first stage has a glass transition temperature of 40 to 150°C and the product obtained from the second stage has a glass transition temperature which is lower by at least 40°C.

9. The coating composition according to any of claims 1 to 7, wherein the copolymer obtained from the first stage has a glass transition temperature of not more than 0°C and the product obtained from the second stage has a glass transition temperature of not more than 0°C.

10. The coating composition according to any of the preceding claims, wherein the cross-linker is a hydrophilically modified polyisocyanate.

11. The coating composition according to any of the preceding claims, wherein the cross-linker is a melamine-formaldehyde resin selected from the group consisting of completely to highly methylolated and fully alkylated to highly alkylated resins, partially methylolated and highly alkylated resins and low-methylolated resins.

12. The use of coating compositions according to any of the preceding claims for coating metals and alloys.

13. The use of coating compositions according to claims 1 to 11 for light, moderate or heavy duty corrosion protection.

## Revendications

1. Masse de revêtement à un et deux composants, contenant
- au moins une dispersion polymère, pouvant être obtenue par polymérisation en émulsion au moins en deux étapes de
dans une première étape, transformation de
(A1) au moins un ester alkylique de l'acide (méth)acrylique,
(B1) éventuellement au moins un aromatique de vinyle comprenant jusqu'à 20 atomes de carbone,
(C1) au moins un (méth)acrylate d'hydroxyalkyle,
(D1) éventuellement au moins un composé polymérisable par voie radicalaire choisi dans le groupe constitué par les nitriles éthyléniquement insaturés comprenant jusqu'à 20 atomes de carbone, les esters de vinyle d'acides carboxyliques comprenant jusqu'à 20 atomes de carbone, les halogénures de vinyle comprenant jusqu'à 10 atomes de carbone et les vinyléthers d'alcools contenant 1 à 10 atomes de carbone,
(E1) éventuellement au moins un acide carboxylique éthyléniquement α,β-insaturé,
(F1) éventuellement au moins un agent de réticulation,
(G1) éventuellement au moins un composé choisi dans le groupe constitué par l'ester 2-(2-oxo-imidazolidin-1-yl)-éthylique de l'acide (méth)acrylique ((méth)acrylate d'uréidoéthyle), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétonacrylamide (DAAM) et le diacétoneméthacrylamide,
(H1) éventuellement au moins un composé présentant un groupe (méth)acrylate et un groupe époxy et
(I1) éventuellement au moins un amide d'acide carboxylique éthyléniquement α,β-insaturé,
en présence d'au moins un initiateur et éventuellement en présence d'au moins un émulsifiant ainsi qu'éventuellement en présence d'au moins un agent de régulation,
à condition que le copolymère obtenu de la première étape
- présente un indice d'acide qui n'est pas supérieur à 10 mg de KOH/g de polymère,
- présente un indice d'hydroxy de 2 à 100 mg de KOH/g de polymère,
- présente une grosseur de particules de 20 à 350, de préférence de 30 à 300 nm et
- présente un poids moléculaire pondéral moyen de 5000 à 200 000 g/mole,
et la somme des monomères (C1) et (I1) vaut 0,5 à 20% en poids,
suivie d'une polymérisation par voie radicalaire dans une étape consécutive en présence du copolymère préparé dans la première étape de
(A2) au moins un ester alkylique de l'acide (méth)acrylique,
(B2) éventuellement au moins un aromatique de vinyle comprenant jusqu'à 20 atomes de carbone,
(C2) éventuellement au moins un (méth)acrylate d'hydroxyalkyle,
(D2) éventuellement au moins un composé polymérisable par voie radicalaire choisi dans le groupe constitué par les nitriles éthyléniquement insaturés comprenant jusqu'à 20 atomes de carbone, les esters de vinyle d'acides carboxyliques comprenant jusqu'à 20 atomes de carbone, les halogénures de vinyle comprenant jusqu'à 10 atomes de carbone et les vinyléthers d'alcools contenant 1 à 10 atomes de carbone,
(E2) éventuellement au moins un acide carboxylique éthyléniquement α,β-insaturé,
(F2) éventuellement au moins un réticulant et
(G2) éventuellement au moins un composé choisi dans le groupe constitué par l'ester 2-(2-oxo-imidazolidin-1-yl)-éthylique de l'acide (méth)acrylique ((méth)acrylate d'uréidoéthyle), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétonacrylamide (DAAM) et le diacétoneméthacrylamide,
(H2) éventuellement au moins un composé présentant un groupe (méth)acrylate et un groupe époxy et
(I2) éventuellement au moins un amide d'acide carboxylique éthyléniquement α,β-insaturé,
éventuellement suivie d'une ou de plusieurs autres étapes de polymérisation par voie radicalaire d'au moins un monomère,
la quantité dudit au moins un émulsifiant étant de 0 à 3,5% en poids par rapport à la quantité totale des monomères polymérisables par voie radicalaire introduits en dosant dans toutes les étapes dans la polymérisation par voie radicalaire,
étant entendu que
- le rapport pondéral de la somme des monomères de la première étape (A1) à (I1) à la somme des monomères des étapes consécutives (A2) à (I2) est de 5:95 à 70:30,
- le produit obtenu de la dernière étape présente une grosseur de particules de 50 à 500 nm,
- l'indice d'acide du produit de la dernière étape n'est pas supérieur à l'indice d'acide du produit de la première étape et
- l'indice d'hydroxy du produit de la dernière étape n'est pas supérieur à l'indice d'hydroxy du produit de la première étape.
- éventuellement au moins un autre liant,
- éventuellement au moins un réticulant, choisi dans le groupe constitué par les polyisocyanates et les résines de mélamine-formaldéhyde,
- éventuellement au moins un pigment,
- éventuellement au moins un inhibiteur de corrosion.

2. Masse de revêtement selon la revendication 1, **caractérisée en ce que** le monomère (A2) est choisi dans le groupe constitué par le méthacrylate de méthyle, l'acrylate de méthyle, l'acrylate d'éthyle, l'acrylate de n-butyle, l'acrylate de 2-éthylhexyle et l'acrylate de 3-propylheptyle.

3. Masse de revêtement selon l'une quelconque des revendications précédentes, **caractérisée en ce que** le monomère (B2) est choisi dans le groupe constitué par le styrène et l'α-méthylstyrène.

4. Masse de revêtement selon l'une quelconque des revendications précédentes, **caractérisée en ce que** le monomère (C1) est choisi dans le groupe constitué par l'ester 2-hydroxyéthylique de l'acide (méth)acrylique, l'ester 2-hydroxypropylique de l'acide (méth)acrylique et l'ester 3-hydroxypropylique de l'acide (méth)acrylique.

5. Masse de revêtement selon l'une quelconque des revendications précédentes, **caractérisée en ce qu'**un monomère (G1) est présent et qu'il s'agit du diacétonacrylamide.

6. Masse de revêtement selon l'une quelconque des revendications précédentes, **caractérisée en ce qu'**il s'agit, pour l'émulsifiant, d'un émulsifiant ionique, de préférence d'un émulsifiant anionique.

7. Masse de revêtement selon l'une quelconque des revendications précédentes, **caractérisée en ce qu'**elle présente une température de formation de film minimale qui n'est pas supérieure à 5°C.

8. Masse de revêtement selon l'une quelconque des revendications précédentes, **caractérisée en ce que** le copolymère obtenu de la première étape présente une température de transition vitreuse de 40 à 150°C et le produit obtenu de la deuxième étape présente une température de transition vitreuse qui est inférieure d'au moins 40°C.

9. Masse de revêtement selon l'une quelconque des revendications 1 à 7, **caractérisée en ce que** le copolymère obtenu de la première étape présente une température de transition vitreuse qui n'est pas supérieure à 0°C et le produit obtenu de la deuxième étape présente une température de transition vitreuse qui n'est pas supérieure à 0°C.

10. Masse de revêtement selon l'une quelconque des revendications précédentes, **caractérisée en ce qu'**il s'agit, pour le réticulant, d'un polyisocyanate modifié de manière hydrophile.

11. Masse de revêtement selon l'une quelconque des revendications précédentes, **caractérisée en ce qu'**il s'agit pour le réticulant d'une résine de mélamine-formaldéhyde, choisie dans le groupe constitué par les résines complètement à hautement méthylolées et complètement à hautement alkylées, les résines partiellement méthylolées et hautement alkylées et les résines faiblement méthylolées.

12. Utilisation des masses de revêtement selon l'une quelconque des revendications précédentes pour le revêtement de métaux et d'alliages.

13. Utilisation de masses de revêtement selon la revendication 1 à 11 dans la protection légère, moyenne ou forte contre la corrosion.
